# EUROPEAN PATENT APPLICATION

(11) **EP 2 532 688 A1**
(43) Date of publication of application: **12.12.2012**
(21) Application number: 11737008.0
(22) Date of filing: 26.01.2011
(51) Int. Cl.: C08F 10/00, C08F 210/14, C10M 107/10, C10M 143/08, C10N 20/02, C10N 20/04, C10N 30/02, C10N 30/10

(54) **ALPHA-OLEFIN (CO)POLYMER, HYDROGENATED ALPHA-OLEFIN (CO)POLYMER AND LUBRICATING OIL COMPOSITION CONTAINING THE SAME**

(30) Priority: 31.08.2010 JP 2010195147; 27.05.2010 JP 2010121937; 26.01.2010 JP 2010014829
(71) Applicant: Idemitsu Kosan Co., Ltd., Chiyoda-ku Tokyo 100-8321 (JP)
(72) Inventor: KATAYAMA, Kiyokazu, Ichihara-shi Chiba 299-0193 (JP); NODA, Hideaki, Ichihara-shi Chiba 299-0193 (JP); SHIMIZU, Hitomi, Ichihara-shi Chiba 299-0193 (JP); OKANO, Masaki, Ichihara-shi Chiba 299-0193 (JP)
(74) Representative: Vossius & Partner
(86) International application number: PCT/JP2011/051391
(87) International publication number: WO 2011/093295

(57) **Abstract**

Provided are an α-olefin (co)polymer useful as high-viscosity lubricant oil excellent in viscosity characteristics and low-temperature characteristics, and a lubricant oil containing the (co)polymer. The α-olefin (co)polymer is produced by the use of a metallocene catalyst and satisfies the following (a') and (b'). (a') The 2,1-insertion ratio at the polymer terminal, as measured through ¹H-NMR, is at least 30 mol% of the entire molecule, and (b') the mesotriad fraction (mm), as measured through ¹³C-NMR, is at most 50 mol%. Preferably, a 1-octene/1-dodecene copolymer is provided, as produced by the use of a metallocene catalyst and satisfying the following (a) to (c). (a) The molar ratio of the 1-octene unit to the 1-dodecene unit is from 20/80 to 80/20, (b) the mesotriad fraction (mm), as measured through ¹³C-NMR, is at most 50 mol%, and (c) the kinematic viscosity at 100°C is from 30 to 1000 mm²/sec.

## Description

### [Technical Field]

The present invention relates to an α-olefin (co)polymer, a hydrogenated α-olefin (co)polymer, and a lubricant oil composition containing it.

### [Background Art]

The property heretofore required for the lubricant oil for automobiles and industrial machines is relatively high viscosity; however, for environmental considerations that have become problematic these days, lower fuel consumption, more energy saving and longer life operation are desired, and synthetic lubricant oils having more excellent viscosity characteristics and low-temperature characteristics are desired, as compared with poly-α-olefins and the like heretofore used in the art.
Heretofore, various trials have been made for obtaining α-olefin copolymers useful as hydrocarbon-based synthetic lubricant oils. For example, there is mentioned a method of polymerizing 1-decene and 1-dodecene using aluminium chloride or aluminium bromide as a catalyst (Patent Reference 1). However, the obtained poly-α-olefin was not always satisfactory in point of the viscosity index, the low-temperature flowability and the durability thereof. Also known are some examples of copolymerizing ethylene or α-olefin in various methods and using the resulting polymers as hydrocarbon-based synthetic lubricant oils (for example, Patent Reference 2). Patent Reference 3 is known as an example of producing an α-olefin copolymer by the use of a metallocene catalyst; and Patent Reference 1 is known as an example of copolymerizing hexane and dodecene or tetradecene. These are all problematic in that only low-molecular-weight polymers are obtained and the low-temperature characteristics thereof are not sufficient. There is known no synthetic lubricant oil having excellent viscosity characteristics and low-temperature characteristics in a 100°C kinematic viscosity region useful as poly-α-olefin.

On the other hand, as a method for preventing oxidation of poly-α-olefin, for example, Patent Reference 4 discloses a polymer having a regular "comb-like structure" by polymerization in the presence of a metallocene catalyst followed by repetitive 1,2-insertion of monomer, saying that the remaining double bond, if any, causes loss of lubricant oil characteristics owing to the oxidation of the double bond. Patent Reference 1 suggests correlation between tertiary carbon and oxidation stability, but does not disclose experimental data to support it. In this, the 1,2-double substitution structure of the polymer is specifically noted; however, the regular structure through 1,2-insertion of monomer, as in Patent Reference 4, is determined merely from another standpoint, and any method of selective production is not disclosed. Further, Patent Reference 5 says that reduction in the bromine number betters oxidation stability.
As in the above, any concrete relationship between polymer structure and oxidation stability is unknown in the art.

### [Reference List]

### [Patent References]

[Patent Reference 1] WO2007/011459
[Patent Reference 2] JP-A 2000-351813
[Patent Reference 3] JP-T 2005-501957
[Patent Reference 4] EP0613873
[Patent Reference 5] WO2007/011832

### [Summary of the Invention]

### [Technical Problem]

The present invention has been made in consideration of the situation as above, and its object is to provide an α-olefin polymer useful as a high-viscosity lubricant oil excellent in viscosity characteristics and low-temperature characteristics, an α-olefin polymer useful as a lubricant oil excellent in oxidation stability, and their hydrogenated products, and a lubricant oil containing them.

### [Solution to Problem]

The present inventors have assiduously studied and, as a result, have found that when 1-octene and 1-dodecene are used as monomers and when a catalyst comprising a metallocene compound is used, or when an α-olefin (co)polymer having a specific 2,1-insertion ratio at the polymer terminal and having a specific mesotriad fraction is produced by the use of a catalyst comprising a metallocene compound, then the above problems can be solved. The present invention has been completed on the basis of these findings.

Specifically, the present invention provides the following:
1. A 1-octene/1-dodecene copolymer produced by the use of a metallocene catalyst and satisfying the following (a) to (c):
   (a) The molar ratio of the 1-octene unit to the 1-dodecene unit is from 20/80 to 80/20,
   (b) The mesotriad fraction (mm), as measured through ¹³C-NMR, is at most 50 mol%,
   (c) The kinematic viscosity at 100°C is from 30 to 1000 mm²/sec;
2. The 1-octene/1-dodecene copolymer of the above 1, having a number-average molecular weight (Mn), as measured through GPC, of from 1500 to 15000;
3. The 1-octene/1-dodecene copolymer of the above 1 or 2, having a weight-average molecular weight (Mw) of from 2100 to 30000;
4. The 1-octene/1-dodecene copolymer of any of the above 1 to 3, having a molecular weight distribution (Mw/Mn) of at most 3.0;
5. The 1-octene/1-dodecene copolymer of any of the above 1 to 4, having a double bond amount relative to all the monomer units, as measured through ¹H-NMR, of at most 0.3 mol%;
6. A lubricant oil composition containing the 1-octene/1-dodecene copolymer of any of the above 1 to 5 and/or a hydrogenated 1-octene/d-dodecene copolymer produced through hydrogenation of the 1-octene/1-dodecene copolymer;
7. An α-olefin (co)polymer produced by the use of a metallocene catalyst and satisfying the following (a') and (b'):
   (a') The 2,1-insertion ratio at the polymer terminal, as measured through ¹H-NMR, is at least 30 mol% of the entire molecule,
   (b') The mesotriad fraction (mm), as measured through ¹³C-NMR, is at most 50 mol%;
8. The α-olefin (co)polymer of the above 7, having a mean short-chain branch number per one molecule of the polymer, as measured through ¹³C-NMR, of at most 2.0;
9. The α-olefin (co)polymer of the above 7 or 8, which is a 1-octene/1-dodecene copolymer;
10. The α-olefin (co)polymer of any of the above 7 to 9, having a double bond amount relative to all the monomer units, as measured through ¹H-NMR, of at most 1.0 mol%;
11. The α-olefin (co)polymer of any of the above 7 to 10, having a molecular weight distribution (Mw/Mn), as measured through GPC, of at most 3.0;
12. The α-olefin (co)polymer of any of the above 7 to 10, having a weight-average molecular weight (Mw), as measured through GPC, of from 200 to 30,000;
13. A hydrogenated α-olefin (co)polymer produced through hydrogenation of the α-olefin (co)polymer of any of the above 7 to 12; and
14. A lubricant oil composition containing the α-olefin (co)polymer of any of the above 7 to 12 and/or the hydrogenated α-olefin (co)polymer of the above 13.

### [Advantageous Effects of the Invention]

According to the present invention, there are provided an α-olefin polymer useful as a high-viscosity lubricant oil excellent in viscosity characteristics and low-temperature characteristics, and a lubricant oil containing the polymer.

### [Brief Description of the Drawing]

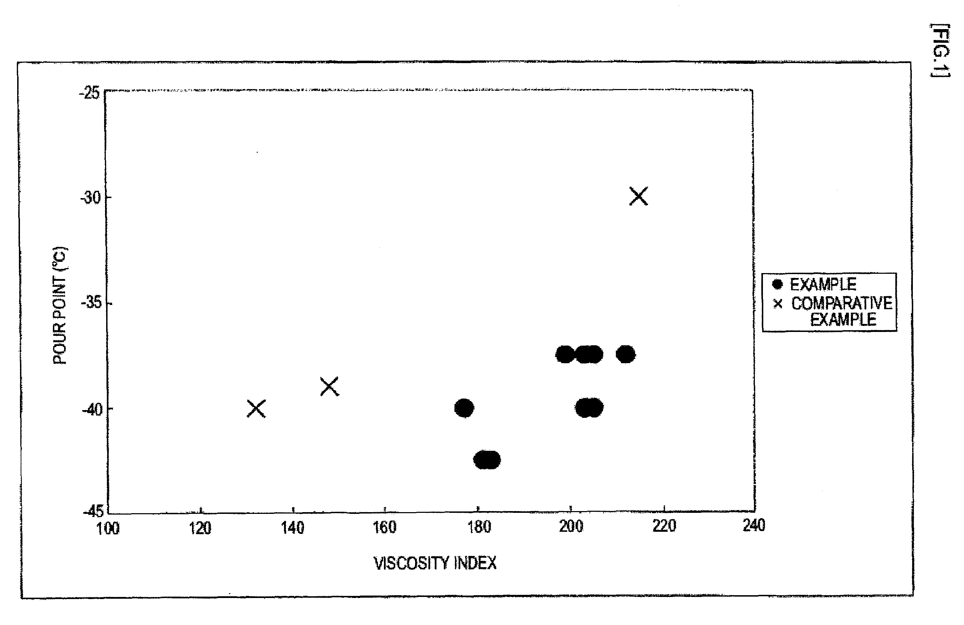

Fig. 1 is a view showing the relationship between the viscosity index and the pour point of the copolymers obtained in Examples 1-1 to 1-9 and Comparative Examples 1-1 to 1-3.

### [Best Mode for Carrying out the Invention]

### [First Aspect of the Invention]

The 1-octene/1-dodecene copolymer of the first aspect of the present invention is produced by the use of a metallocene catalyst and satisfies the following (a) to (c):
(a) The molar ratio of the 1-octene unit to the 1-dodecene unit is from 20/80 to 80/20,
(b) The mesotriad fraction (mm), as measured through ¹³C-NMR, is at most 50 mol%,
(c) The kinematic viscosity at 100°C is from 30 to 1000 mm²/sec.

The 1-octene/1-dodecene copolymer of the first aspect of the present invention is obtained by using 1-octene and 1-dodecene as monomers. The copolymer obtained by using 1-hexene in place of 1-octene has poor viscosity characteristics (its viscosity index is small), and the copolymer obtained by using an α-olefin having a larger carbon number than that of 1-dodecene, in place of 1-dodecene, has poor flow characteristics.

The 1-octene/1-dodecene copolymer of the first aspect of the present invention requires (a) the molar ratio of the 1-octene unit to the 1-dodecene unit therein is from 20/80 to 80/20, as described above, preferably from 30/70 to 70/30, more preferably from 40/60 to 60/40, even more preferably from 45/55 to 55/45. When the proportion of the 1-octene unit is less than 20, then the copolymer has poor low-temperature characteristics in that its pour point becomes high; but when the proportion of the 1-octene unit is more than 80, then the copolymer has poor viscosity characteristics in that its viscosity index lowers.

The 1-octene/1-dodecene copolymer of the first aspect of the present invention requires (b) the mesotriad fraction (mm) therein, as measured through ¹³C-NMR, is at most 50 mol%, as described above, preferably from 25 to 50 mol%, more preferably from 30 to 40 mol%, even more preferably from 32 to 38 mol%. When the mesotriad fraction (mm) is more than 50 mol%, the copolymer has poor low-temperature characteristics. When the mesotriad fraction (mm) is at least 25 mol%, then the copolymer is more preferred in point of the low-temperature characteristics thereof.

The 1-octene/1-dodecene copolymer of the first aspect of the present invention requires (c) the kinematic viscosity at 100°C measured according to JISK2283, as described above, is from 30 to 1000 mm²/sec, preferably from 30 to 50 mm²/sec, more preferably from 40 to 200 mm²/sec. When the kinematic viscosity at 100°C is less than 30 mm²/sec, the copolymer is unsatisfactory in point of the durability when used as a high-viscosity lubricant oil ingredient for use in wind power stations, etc.; and when more than 1000 mm²/sec, the copolymer is unsatisfactory in view of the energy-saving standpoint.

Preferably, the number-average molecular weight (Mn), as measured through gel permeation chromatography (GPC), of the 1-octene/1-dodecene copolymer of the first aspect of the present invention is from 1,500 to 15,000, from the viewpoint of the apparatus life and the energy-saving side in use in wind power stations and others, like in the above, more preferably from 1,500 to 10,000, even more preferably from 2,000 to 6,000.

For the same reason, the weight-average molecular weight (Mw), as measured through GPC, of the 1-octene/1-dodecene copolymer of the present invention is preferably from 2,100 to 30,000, more preferably from 2,800 to 20,000, even more preferably from 3,500 to 10,000.

Preferably, the molecular weight distribution (Mw/Mn) of the 1-octene/1-dodecene copolymer of the first aspect of the present invention is at most 3.0, more preferably at most 2.0, even more preferably from 1.3 to 2.0. When the molecular weight distribution (Mw/Mn) is at most 3.0, then the high-molecular-weight ingredient decreases to improve the shear stability, and the low-molecular-weight ingredient decreases to lower the volatility.

Preferably, the double bond amount relative to all the monomer units, as measured through ¹H-NMR, in the 1-octene/1-dodecene copolymer of the first aspect of the present invention is at most 0.3 mol% from the viewpoint of the oxidation stability since the unsaturated site is fully hydrogenated, more preferably at most 0.2 mol%, even more preferably at most 0.1 mol%. Preferably, the bromine value of the copolymer, as measured according to JIS K 2605, is preferably at most 0.4 g bromine/100 g.

Regarding the polymer terminal structure of the 1-octene/1-dodecene copolymer of the first aspect of the present invention, the proportion of chain transfer reaction occurring in monomer 2,1-insertion is preferably larger. Preferably, the proportion of the 2,1-insertion terminal molecule is at least 30 mol%, more preferably at least 50 mol%, even more preferably at least 60 mol%. When the proportion is at least 30 mol%, then the methyl branches in the molecule could reduce and the stability to oxidation and heat is thereby improved.

The 1-octene/1-dodecene copolymer of the first aspect of the present invention has a lower pour point and a higher viscosity index than conventional α-olefin polymers. For example, the 1-octene/1-dodecene copolymer having a kinematic viscosity at 100°C of about 40 mm²/sec generally has a pour point of not higher than -40°C and has a viscosity index (VI) of at least 170. The 1-octene/1-dodecene copolymer having a kinematic viscosity at 100°C of about 100 mm²/sec generally has a pour point of not higher than -35°C and has a viscosity index (VI) of at least 190.

The 1-octene/1-dodecene copolymer of the first aspect of the present invention can be produced by using, as the catalyst, the following (A) a metallocene compound and (B) (b-1) an organic aluminiumoxy compound and/or (b-2) an ionic compound capable of changing to a cation through reaction with the metallocene compound.

As the metallocene compound (A), herein usable are those of the following general formulae (I) to (IV):

(C¹)(C²)M¹X¹X²Y¹ₐY²_{b} (I)

wherein M¹ represents titanium, zirconium or hafnium; C¹ and C² each independently represent a cyclopentadienyl group or an indenyl group, or an alkyl-substituted group thereof, and C¹ and C² may be the same or different; X¹ and X² each independently represent a σ-bonding ligand or a chelating ligand, and X¹ and X² may be the same or different; Y¹ and Y² each independently represent a Lewis base, and Y¹ and Y² may be the same or different; a and b each independently indicate 0 or 1.

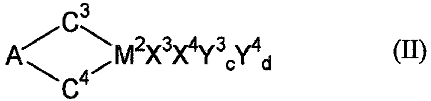

wherein M² represents titanium, zirconium or hafnium; C³ and C⁴ each independently represent a cyclopentadienyl group or an indenyl group, or an alkyl-substituted group thereof, and C³ and C⁴ may be the same or different; X³ and X⁴ each independently represent a σ-bonding ligand or a chelating ligand, and X³ and X⁴ may be the same or different; Y³ and Y⁴ each independently represent a Lewis base, and Y³ and Y⁴ may be the same or different; c and d each independently indicate 0 or 1; A represents a crosslinking group, -R₂C- or -R₂Si-; and R each independently represents a hydrogen atom or a hydrocarbon group.

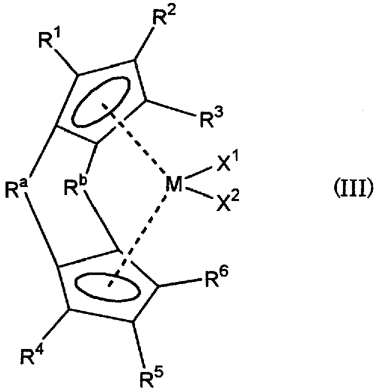

wherein R¹ to R⁶ each independently represent a hydrogen atom, a halogen atom, a hydrocarbon group having from 1 to 20 carbon atoms, preferably from 1 to 10 carbon atoms, more preferably from 1 to 4 carbon atoms (e.g., alkyl group), or an organic group having from 1 to 20 carbon atoms and having at least one atom selected from a halogen atom, a silicon atom, an oxygen atom, a sulfur atom, a nitrogen atom and a phosphorus atom; at least one selected from R¹ to R³ is a hydrogen atom, and at least one selected from R⁴ to R⁶ is a hydrogen atom; R^{a} and R^{b} each independently represent a linking group represented by the following general formula (a); X¹ and X² each independently represent a hydrogen atom, a halogen atom, a hydrocarbon group having from 1 to 20 carbon atoms, or an organic group having from 1 to 20 carbon atoms and having at least one atom selected from a halogen atom, a silicon atom, an oxygen atom, a sulfur atom, a nitrogen atom and a phosphorus atom; M represents a transition metal of Group 4 to Group 6 of the Periodic Table.

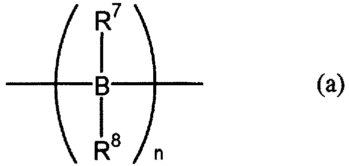

wherein n indicates an integer of from 1 to 3; R⁷ and R⁸ each independently represent a hydrogen atom, a halogen atom, a hydrocarbon group having from 1 to 20 carbon atoms, or a halogen-containing hydrocarbon group having from 1 to 20 carbon atoms, preferably a hydrogen atom or a hydrocarbon group having from 1 to 4 carbon atoms, more preferably a hydrogen atom or an alkyl group having from 1 to 4 carbon atoms; and B represents an atom of Group 14 of the Periodic Table.
Preferred examples of R^{a} and R^{b} are -CR⁷R⁸-, -SiR⁷R⁸-, -CR⁷R⁸-CR⁷R⁸-, and -SiR⁷R⁸-SiR⁷R⁸-.

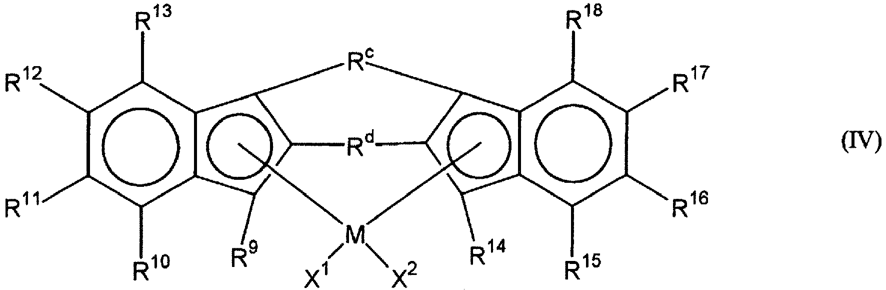

wherein R⁹ to R¹⁸ and X¹ and X² each independently represent a hydrogen atom, a halogen atom, a hydrocarbon group having from 1 to 20 carbon atoms, preferably a hydrocarbon atoms having from 1 to 10 carbon atoms, more preferably from 1 to 4 carbon atoms (e.g., alkyl group), a halogen-containing hydrocarbon atoms having from 1 to 20 carbon atoms, a silicon-containing group, an oxygen-containing group, a sulfur-containing group, a nitrogen-containing group, or a phosphorus-containing group, and the adjacent groups may bond to each other to form a ring; R^{c} and R^{d} each are a divalent group to bond the two ligands, each independently representing a divalent hydrocarbon group having from 1 to 20 carbon atoms, preferably from 1 to 10 carbon atoms, more preferably from 1 to 4 carbon atoms, a divalent halogen-containing hydrocarbon group having from 1 to 20 carbon atoms, a divalent silicon-containing group, a divalent germanium-containing group, a divalent tin-containing group, -O-, - CO-, -S-, -SO₂-, -NR¹⁹-, -PR¹⁹-, -P(O)R¹⁹-, -BR¹⁹- or -AlR¹⁹-; R¹⁹ represents a hydrogen atom, a halogen atom, a hydrocarbon group having from 1 to 20 carbon atoms, or a halogen-containing hydrocarbon group having from 1 to 20 carbon atoms; M represents a transition metal of Group 4 to Group 6 of the Periodic Table.

Specific examples of the metallocene compound represented by the above general formula (I) include bis(cyclopentadienyl)zirconium dichloride, bis(methylcyclopentadienyl)zirconium dichloride, bis(ethylcyclopentadienyl)zirconium dichloride, bis(isopropylcyclopentadienyl)zirconium dichloride, bis(n-propylcyclopentadienyl)zirconium dichloride, bis(n-butylcyclopentadienyl)zirconium dichloride, bis(t-butylcyclopentadienyl)zirconium dichloride, bis(hexylcyclopentadienyl)zirconium dichloride, bis(trimethylsilylcyclopentadienyl)zirconium dichloride, bis(trimethylsilylmethylcyclopentadienyl)zirconium dichloride, bis(cyclopentadienyl)zirconium chlorohydride, bis(cyclopentadienyl)methylzirconium chloride, bis(cyclopentadienyl)ethylzirconium chloride, bis(cyclopentadienyl)methoxyzirconium chloride, bis(cyclopentadienyl)phenylzirconium chloride, bis(cyclopentadienyl)dimethylzirconium, bis(cyclopentadienyl)diphenyllzirconium, bis(cyclopentadienyl)dineopentylzirconium, bis(cyclopentadienyl)dihydrozirconium, bis(cyclopentadienyl)dimethoxyzirconium, and further their derivatives prepared by substituting the chlorine atom in these compounds with a bromine atom, an iodine atom, a hydrogen atom, a methyl group, a phenyl group or the like, and their derivatives prepared by substituting the center metal zirconium in these compounds with titanium or hafnium.

Specific examples of the metallocene compound represented by the above general formula (II) include ethylene-bis(cyclopentadienyl)hafnium dichloride, ethylene-bis(cyclopentadienyl)zirconium dichloride, methylene-bis(cyclopentadienyl)hafnium dichloride, methylene-bis(cyclopentadienyl)zirconium dichloride, isopropylidene-bis(cyclopentadienyl)hafnium dichloride, isopropylidene-bis(cyclopentadienyl)zirconium dichloride, dimethylsilylene-bis(cyclopentadienyl)hafnium dichloride, dimethylsilylene-bis(cyclopentadienyl)zirconium dichloride.

Specific examples of the metallocene compound represented by the above general formula (III) include dichloro forms such as (1,1'-ethylene)(2,2'-ethylene)biscyclopentadienylzirconium dichloride, (1,1'-ethylene)(2,2'-ethylene)bis(3-methylcyclopentadienyl)zirconium dichloride, (1,1'-ethylene)(2,2'-ethylene)bis(4-methylcyclopentadienyl)zirconium dichloride, (1,1'-ethylene)(2,2'-ethylene)bis(3,4-dimethylcyclopentadienyl)zirconium dichloride, (1,1'-ethylene)(2,2'-ethylene)bis(3,5-dimethylcyclopentadienyl)zirconium dichloride, (1,1'-dimethylsilylene)(2,2'-dimethylsilylene)biscyclopentadienylzirconium dichloride, (1,1'-dimethylsilylene)(2,2'-dimethylsilylene)bis(3-methylcyclopentadienyl)zirconium dichloride, (1,1'-dimethylsilylene)(2,2'-dimethylsilylene)bis(4-methylcyclopentadienyl)zirconium dichloride, (1,1'-dimethylsilylene)(2,2'-dimethylsilylene)bis(3,4-dimethylcyclopentadienyl)zirconium dichloride, (1,1'-dimethylsilylene)(2,2'-dimethylsilylene)bis(3,5-dimethylcyclopentadienyl)zirconium dichloride, (1,1'-dimethylsilylene)(2,2'-ethylene)biscyclopentadienylzirconium dichloride, (1,1'-dimethylsilylene)(2,2'-ethylene)bis(3-methylcyclopentadienyl)zirconium dichloride, (1,1'-dimethylsilylene)(2,2'-ethylene)bis(4-methylcyclopentadienyl)zirconium dichloride, (1,1'-dimethylsilylene)(2,2'-ethylene)bis(3,4-dimethylcyclopentadienyl)zirconium dichloride, (1,1'-dimethylsilylene)(2,2'-ethylene)bis(3,5-dimethylcyclopentadienyl)zirconium dichloride, (1,1'-isopropylidene)(2,2'-dimethylsilylene)biscyclopentadienylzirconium dichloride, (1,1'-isopropylidene)(2,2'-dimethylsilylene)bis(3-methylcyclopentadienyl)zirconium dichloride, (1,1'-isopropylidene)(2,2'-dimethylsilylene)bis(4-methylcyclopentadienyl)zirconium dichloride, (1,1'-isopropylidene)(2,2'-dimethylsilylene)bis(3,4-dimethylcyclopentadienyl)zirconium dichloride, (1,1'-isopropylidene)(2,2'-dimethylsilylene)bis(3,5-dimethylcyclopentadienyl)zirconium dichloride, (1,1'-isopropylidene)(2,2'-isopropylidene)bis(3-methylcyclopentadienyl)zirconium dichloride, (1,1'-isopropylidene)(2,2'-isopropylidene)bis(4-methylcyclopentadienyl)zirconium dichloride, (1,1'-isopropylidene)(2,2'-isopropylidene)bis(3,4-dimethylcyclopentadienyl)zirconium dichloride, (1,1'-isopropylidene)(2,2'-isopropylidene)bis(3,5-dimethylcyclopentadienyl)zirconium dichloride, etc., as well as dimethyl forms, diethyl forms, dihydro forms, diphenyl forms, dibenzyl forms and others corresponding to the above compounds, and their titanium or hafnium complexes.

The compound represented by the above general formula (IV) includes, for example, dichloro forms such as (1,1'-ethylene)(2,2'-ethylene)bisindenylzirconium dichloride, (1,1'-ethylene)(2,2'-ethylene)bis(3-methylindenyl)zirconium dichloride, (1,1'-ethylene)(2,2'-ethylene)bis(4-methylindenyl)zirconium dichloride, (1,1'-ethylene)(2,2'-ethylene)bis(5-methylindenyl)zirconium dichloride, (1,1'-ethylene)(2,2'-ethylene)bis(5,6-benzoindenyl)zirconium dichloride, (1,1'-ethylene)(2,2'-ethylene)bis(4,5-benzoindenyl)zirconium dichloride, (1,1'-ethylene)(2,2'-ethylene)bis(5,6-dimethylindenyl)zirconium dichloride, (1,1'-dimethylsilylene)(2,2'-dimethylsilylene)bisindenylzirconium dichloride, (1,1'-dimethylsilylene)(2,2'-dimethylsilylene)bis(3-methylindenyl)zirconium dichloride, (1,1'-dimethylsilylene)(2,2'-dimethylsilylene)bis(4-methylindenyl)zirconium dichloride, (1,1'-dimethylsilylene)(2,2'-dimethylsilylene)bis(5-methylindenyl)zirconium dichloride, (1,1'-dimethylsilylene)(2,2'-dimethylsilylene)bis(5,6-benzoindenyl)zirconium dichloride, (1,1'-dimethylsilylene)(2,2'-dimethylsilylene)bis(4,5-benzoindenyl)zirconium dichloride, (1,1'-dimethylsilylene)(2,2'-dimethylsilylene)bis(5,6-dimethylindenyl)zirconium dichloride, (1,1'-dimethylsilylene)(2,2'-ethylene)bisindenylzirconium dichloride, (1,1'-dimethylsilylene)(2,2'-ethylene)bis(3-methylindenyl)zirconium dichloride, (1,1'-dimethylsilylene)(2,2'-ethylene)bis(4-methylindenyl)zirconium dichloride, (1,1'-dimethylsilylene)(2,2'-ethylene)bis(5-methylindenyl)zirconium dichloride, (1,1'-dimethylsilylene)(2,2'-ethylene)bis(5,6-benzoindenyl)zirconium dichloride, (1,1'-dimethylsilylene)(2,2'-ethylene)bis(4,5-benzoindenyl)zirconium dichloride, (1,1'-dimethylsilylene)(2,2'-ethylene)bis(5,6-dimethylindenyl)zirconium dichloride, (1,1'-ethylene)(2,2'-dimethylsilylene)bisindenylzirconium dichloride, (1,1'-ethylene)(2,2'-dimethylsilylene)bis(3-methylindenyl)zirconium dichloride, (1,1'-ethylene)(2,2'-dimethylsilylene)bis(4-methylindenyl)zirconium dichloride, (1,1'-ethylene)(2,2'-dimethylsilylene)bis(5-methylindenyl)zirconium dichloride, (1,1'-ethylene)(2,2'-dimethylsilylene)bis(5,6-benzoindenyl)zirconium dichloride, (1,1'-ethylene)(2,2'-dimethylsilylene)bis(4,5-benzoindenyl)zirconium dichloride, (1,1'-ethylene)(2,2'-dimethylsilylene)bis(5,6-dimethylindenyl)zirconium dichloride, (1,1'-dimethylsilylene)(2,2'-isopropylidene)bisindenylzirconium dichloride, (1,1'-dimethylsilylene)(2,2'-isopropylidene)bis(3-methylindenyl)zirconium dichloride, (1,1'-dimethylsilylene)(2,2'-isopropylidene)bis(4-methylindenyl)zirconium dichloride, (1,1'-dimethylsilylene)(2,2'-isopropylidene)bis(5-methylindenyl)zirconium dichloride, (1,1'-dimethylsilylene)(2,2'-isopropylidene)bis(5,6-benzoindenyl)zirconium dichloride, (1,1'-dimethylsilylene)(2,2'-isopropylidene)bis(4,5-benzoindenyl)zirconium dichloride, (1,1'-dimethylsilylene)(2,2'-isopropylidene)bis(5,6-dimethylindenyl)zirconium dichloride, etc., as well as dimethyl forms, diethyl forms, dihydro forms, diphenyl forms, dibenzyl forms and others corresponding to the above compounds, and their titanium or hafnium complexes.

One or more different types of the above metallocene compounds may be used as the ingredient (A) either singly or as combined.

The catalyst for use in the present invention includes, as the ingredient (B), (b-1) an organic aluminiumoxy compound and/or (b-2) an ionic compound capable of changing to a cation through reaction with the above metallocene compound.
The organic aluminiumoxy compound (b-1) includes a linear aluminoxane represented by the following general formula (V), and a cyclic aluminoxane represented by the following general formula (VI):

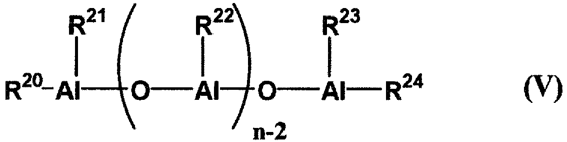

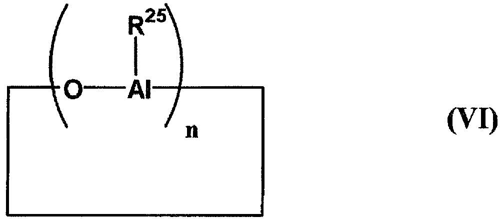

In the general formulae (V) and (VI), R²⁰ to R²⁵ each independently represent a hydrocarbon group having from 1 to 20 carbon atoms, preferably from 1 to 12 carbon atoms, or a halogen atom. The hydrocarbon group includes an alkyl group, an alkenyl group, an aryl group, an arylalkyl group, etc. n indicates a degree of polymerization, and is an integer generally falling between 2 and 50, preferably between 2 and 40. R²⁰ to R²⁵ may be the same or different.

Specific examples of the above aluminoxane include methylaluminoxane, ethylaluminoxane, isobutylaluminoxane, etc.

For producing the aluminoxane, there may be mentioned a method of contacting an alkylaluminium with a condensing agent such as water or the like; however, the means is not specifically defined, and the reaction may be attained in any known method. For example, herein employable are a method of dissolving an organic aluminium compound in an organic solvent and contacting it with water; a method of initially adding an aluminium compound during polymerization and thereafter adding water thereto; a method of reacting the crystal water contained in a metal salt or the adsorbed water in an inorganic substance or an organic substance with an organic aluminium compound; and a method of reacting a tetraalkyldialuminoxane with a trialkylaluminium and followed by further reaction with water. The aluminoxane may be insoluble in toluene. One or more different types of such aluminoxanes may be used here either singly or as combined.

On the other hand, the ingredient (b-2) may be any and every ionic compound capable of changing into a cation through reaction with the metallocene compound of the above ingredient (A). Preferred are the compounds of the following general formulae (VII) and (VIII):

([L¹-R²⁶]^{k+})ₐ([Z)⁻)_{b} (VII)

([L²)^{k+})ₐ([Z]⁻)_{b} (VII)

In the general formula (VII), L¹ represents a Lewis base; R²⁶ represents a hydrogen atom, an alkyl group having from 1 to 20 carbon atoms, or a hydrocarbon group having from 6 to 20 carbon atoms and selected from an aryl group, an alkylaryl group and an arylalkyl group.

Specific examples of L¹ include ammonia, amines such as methylamine, aniline, dimethylamine, diethylamine, N-methylaniline, diphenylamine, N,N-dimethylaniline, trimethylamine, triethylamine, tri-n-butylamine, methyldiphenylamine, pyridine, p-bromo-N,N-dimethylaniline, p-nitro-N,N-dimethylaniline, etc.; phosphines such as triethylphosphine, triphenylphosphine, diphenylphosphine, etc.; thioethers such as tetrahydrothiophene, etc.; esters such as ethyl benzoate, etc.; nitriles such as acetonitrile, benzonitrile, etc. Specific examples of R²⁶ include a hydrogen atom, a methyl group, an ethyl group, a benzyl group, a trityl group, etc.

In the general formula (VIII), L² represents M¹, R²⁷R²⁸M², R²⁹C or R³⁰M². R²⁷ and R²⁸ each independently represent a cyclopentadienyl group, a substituted cyclopentadienyl group, an indenyl group or a fluorenyl group; R²⁹ represents an alkyl group having from 1 to 20 carbon atoms, or a hydrocarbon group having from 6 to 20 carbon atoms and selected from an aryl group, an alkylaryl group and an arylalkyl group. R³⁰ represents a macrocyclic ligand such as tetraphenylporphyrin, phthalocyanine, etc.
M¹ includes an element of Group 1 to Group 3, Group 11 to Group 13 and Group 17 of the Periodic Table; and M² represents an element of Group 7 to Group 12 of the Periodic Table.

Specific examples of R²⁷ and R²⁸ include a cyclopentadienyl group, a methylcyclopentadienyl group, an ethylcyclopentadienyl group, a pentamethylcyclopentadienyl group, etc. Specific examples of R²⁹ include a phenyl group, a p-tolyl group, a p-methoxyphenyl group, etc. Specific examples of R³⁰ include a tetraphenylporphyrin, phthalocyanine, etc. Specific examples of M¹ include Li, Na, K, Ag, Cu, Br, I, I₃, etc. Specific examples of M² include Mn, Fe, Co, Ni, Zn, etc.

In the general formulae (VII) and (VIII), k indicates the ionic valence of [L1-R²⁶] and [L²], and is an integer of from 1 to 3; a indicates an integer of 1 or more; and b = (k × a). [Z]⁻ represents a non-coordinating anion [Z¹]⁻ or [Z²]⁻. [Z¹]⁻ means an anion with plural groups bonding to an element, which may be represented by [M³G¹G². . . G^{f}]⁻. M³ represents an element of Groups 5 to 15 of the Periodic Table, preferably an element of Groups 13 to 15 of the Periodic Table. G¹ to G^{f} each represent a hydrogen atom, a halogen atom, an alkyl group having from 1 to 20 carbon atoms, a dialkylamino group having from 2 to 40 carbon atoms, an alkoxy group having from 1 to 20 carbon atoms, an aryl group having from 6 to 20 carbon atoms, an aryloxy group having from 6 to 20 carbon atoms, an alkylaryl group having from 7 to 40 carbon atoms, an arylalkyl group having from 7 to 40 carbon atoms, a halogen-substituted hydrocarbon group having from 1 to 20 carbon atoms, an acyloxy group having from 1 to 20 carbon atoms, an organic metalloid group, or a hetero atom-containing hydrocarbon group having from 2 to 20 carbon atoms. Two or more of G¹ to G^{f} may form a ring. f indicates an integer of [(atomic valence of the center atom M³) + 1]. [Z²]⁻ represents a conjugate base for a single Broensted acid, of which the logarithm of the reciprocal of the acid dissociation constant (pKa) is not larger than -10, or for a combination of such a Broensted acid and a Lewis acid, or represents a conjugate base for an acid generally defined as an ultra-strong acid. A Lewis acid may coordinate with it.

In [Z¹]⁻, or that is, [M³G¹G². . . G^{f}]⁻, specific examples of M₃ include B, Al, Si, P, As, Sb, etc. Preferred are B and Al. Specific examples G¹, and G² to G^{f} include, as the dialkylamino group, a dimethylamino group, a diethylamino group, etc.; as the alkoxy group and the aryloxy group, a methoxy group, an ethoxy group, an n-propoxy group, a phenoxy group, etc.; as the hydrocarbon group, a methyl group, an ethyl group, an n-propyl group, an isopropyl group, an n-butyl group, an isobutyl group, an n-octyl group, an n-eicosyl group, a phenyl group, a p-tolyl group, a benzyl group, a 4-t-butylphenyl group, a 3,5-dimethylphenyl group, etc.; as the halogen atom, fluorine, chlorine, bromine, iodine; as the hetero atom-containing hydrocarbon group, a p-fluorophenyl group, a 3,5-difluorophenyl group, a pentachlorophenyl group, a 3,4,5-trifluorophenyl group, a pentafluorophenyl group, a 3,5-dib(trifluromethyl)phenyl group, a bis(trimethylsilyl)methyl group, etc.; as the organic metalloid group, a pentamethylantimonyl group, a trimethylsilyl group, a trimethylgermyl group, a diphenylarsinyl group, a dicyclohexylantimonyl group, a diphenylboron group, etc.

Specific examples of the non-coordinating anion, or that is, the conjugate base [Z²]⁻ for a single Broensted acid, of which pKa is not larger than -10, or for a combination of such a Broensted acid and a Lewis acid include a trifluoromethanesulfonate anion (CF₃SO₃)⁻, a bis(trifluoromethanesulfonyl)methyl anion, a bis(trifluoromethanesulfonyl)benzyl anion, a bis(trifluoromethanesulfonyl)amide, a perchlorate anion (ClO₄)⁻, a trifluoroacetate anion (CF₃COO)⁻, a hexafluoroantimony anion (SbF₆)⁻, a fluorosulfonate anion (FSO₃)⁻, a chlorosulfonate anion (ClSO₃)⁻, a fluorosulfonate anion/5-fluoroantimony (FSO₃/SbF₅)⁻, a fluorosulfonate anion/5-fluoroarsenic (FSO₃/AsF₅)⁻, a trifluoromethanesulfonate/5-fluoroantimony (CF₃SO₃/SbF₅)⁻, etc.

Specific examples of the compounds for the ingredient (b-2) include triethylammonium tetraphenylborate, tri-n-butylammonium tetraphenylborate, trimethylammonium tetraphenylborate, tetraethylammonium tetraphenylborate, methyl(tri-n-butyl)ammonium tetraphenylborate, benzyl(tri-n-butyl)ammonium tetraphenylborate, dimethyldiphenylammonium tetraphenylborate, triphenyl(methyl)ammonium tetraphenylborate, trimethylanilinium tetraphenylborate, methylpyridinium tetraphenylborate, benzylpyridinium tetraphenylborate, methyl(2-cyanopyridinium) tetraphenylborate, triethylammonium tetrakis(pentafluorophenyl)borate, tri-n-butylammonium tetrakis(pentafluorophenyl)borate, triphenylammonium tetrakis(pentafluorophenyl)borate, tetra-n-butylammonium tetrakis(pentafluorophenyl)borate, tetraethylammonium tetrakis(pentafluorophenyl)borate, benzyl(tri-n-butyl)ammonium tetrakis(pentafluorophenyl)borate, methyldiphenylammonium tetrakis(pentafluorophenyl)borate, triphenyl(methyl)ammonium tetrakis(pentafluorophenyl)borate, methylanilinium tetrakis(pentafluorophenyl)borate, dimethylanilinium tetrakis(pentafluorophenyl)borate, trimethylanilinium tetrakis(pentafluorophenyl)borate, methylpyridinium tetrakis(pentafluorophenyl)borate, benzylpyridinium tetrakis(pentafluorophenyl)borate, methyl(2-cyanopyridinium) tetrakis(pentafluorophenyl)borate, benzyl(2-cyanopyridinium) tetrakis(pentafluorophenyl)borate, methyl(4-cyanopyridinium) tetrakis(pentafluorophenyl)borate, triphenylphosphonium tetrakis(pentafluorophenyl)borate, dimethylanilinium tetrakis[bis(3,5-ditrifluoromethyl)phenyl]borate, ferrocenium tetraphenylborate, silver tetraphenylborate, trityl tetraphenylborate, tetraphenylporphyrinmanganese tetraphenylborate, ferrocenium tetrakis(pentafluorophenyl)borate, (1,1'-dimethylferrocenium) tetrakis(pentafluorophenyl)borate, decamethylferrocenium tetrakis(pentafluorophenyl)borate, silver tetrakis(pentafluorophenyl)borate, trityl tetrakis(pentafluorophenyl)borate, lithium tetrakis(pentafluorophenyl)borate, sodium tetrakis(pentafluorophenyl)borate, tetraphenylporphyrinmanganese tetrakis(pentafluorophenyl)borate, silver tetrafluoroborate, silver hexafluoroborate, silver hexafluoroarsenate, silver perchlorate, silver trifluoroacetate, silver trifluoromethanesulfonate, etc.

One or more different types of such (b-2) ingredients may be used here either singly or as combined. The blend ratio of the ingredient (A) and the ingredient (B) for use in the present invention is described. In case where the ingredient (b-1) is used as the ingredient (B), the ratio by mol is preferably from 1/1 to 1/1,000,000, more preferably from 1/10 to 1/10,000; and in case where the ingredient (b-2) is used, the ratio by mol is preferably from 10/1 to 1/100, more preferably from 2/1 to 1/10. As the ingredient (B), one or more different types of (b-1) and (b-2) may be used here either singly or as combined.

The catalyst for use in the present invention may contain the above ingredient (A) and ingredient (B) as the main ingredients therein, or may contain the ingredient (A), the ingredient (B) and an organic aluminium compound (C) as the main ingredients therein. As the organic aluminium compound for the ingredient (C), herein usable is a compound represented by the following general formula (IX):

(R³¹)ᵥAlQ₃₋ᵥ (IX)

wherein R²⁰ represents an alkyl group having from 1 to 10 carbon atoms, Q represents a hydrogen atom, an alkoxy group having from 1 to 20 carbon atoms, an aryl group having from 6 to 20 carbon atoms, or a halogen atom; and v indicates an integer of from 1 to 3.

Specific examples of the compound represented by the above general formula (IX) include trimethylaluminium, triethylaluminium, triisopropylaluminium, triisobutylaluminium, dimethylaluminium chloride, diethylaluminium chloride, methylaluminium dichloride, ethylaluminium dichloride, dimethylaluminium fluoride, diisobutylaluminium hydride, diethylaluminium hydride, ethylaluminium sesquichloride, etc. One or more different types of these organic aluminium compounds may be used here either singly or as combined. The blend ratio of the ingredient (A) to the ingredient (C) to be used here is, by mol, preferably from 1/1 to 1/10,000, more preferably from 1/5 to 1/2,000, even more preferably from 1/10 to 1/1,000. Using the ingredient (C) enhances the activity per the transition metal; however, using too much is unfavorable since the organic aluminium compound may be go to waste and since a large amount of the compound may remain in the α-olefin polymer.

In the present invention, at least one catalyst ingredient may be supported by a suitable carrier. The type of the carrier is not specifically defined, and any of an inorganic oxide carrier, and other inorganic carrier and organic carrier may be usable here. Especially from the viewpoint of morphology control, preferred is an inorganic oxide carrier or other inorganic carrier.

Concretely, the inorganic oxide carrier includes SiO₂, Al₂O₃, MgO, ZrO₂, TiO₂, Fe₂O₃, B₂O₃, CaO, ZnO, BaO, ThO₂ and their mixtures, for example, silica alumina, zeolite, ferrite, glass fibers, etc. Especially preferred are SiO₂ and Al₂O₃. The inorganic oxide carrier may contain a small amount of a carbonate, a nitrate, a sulfate, etc. On the other hand, the other carriers than the above include magnesium compounds represented by a general formula Mg(R³²)ₐX_{b} such as typically MgCl₂, Mg(OC₂H₅)₂, etc.; and their complexes. R³² represents an alkyl group having from 1 to 20 carbon atoms, an alkoxy group having from 1 to 20 carbon atoms, or an aryl group having from 6 to 20 carbon atoms; X represents a halogen atom, or an alkyl group having from 1 to 20 carbon atoms; a indicates from 0 to 2, b indicates from 0 to 2, and a + b = 2. R³²'s and X's each may be the same or different.

The organic carrier includes polymers such as polystyrene, styrene-divinylbenzene copolymer, polyethylene, polypropylene, substituted polystyrene, polyarylate, etc.; and starch, carbon, etc. As the carrier for use in the present invention, preferred are MgCl₂, MgCl(OC₂H₅), Mg(OC₂H₅)₂, SiO₂, Al₂O₃, etc. The properties of the carrier differ depending on the type and the production method thereof. The mean particle size of the carrier is generally from 1 to 300 µm, preferably from 10 to 200 µm, more preferably from 20 to 100 µm. When the particle size is too small, then the amount of fine powder in the 1-octene/1-dodecene copolymer may increase; but when too large, then the amount of coarse particles of the 1-octene/1-dodecene copolymer may increase therefore resulting in the reduction in the bulk density of the copolymer and in clogging of hopper. The specific surface area of the carrier may be generally from 1 to 1,000 m²/g, preferably from 50 to 500 m²/g; and the pore volume thereof may be generally from 0.1 to 5 cm³/g, preferably from 0.3 to 3 cm³/g. When any of the specific surface area or the pore volume oversteps the above range, then the catalyst activity may lower. The specific surface area and the pore volume may be computed, for example, from the volume of the nitrogen gas adsorbed by the carrier according to a BET method (see "J. Am. Chem. Soc., 60, 309 (1983)"). Preferably, the carrier is fired before use herein, generally at 150 to 1,000°C, preferably at 200 to 800°C.

In case where at least one catalyst ingredient is supported by the carrier, at least one of the ingredient (A) and the ingredient (B), but preferably both of the ingredient (A) and the ingredient (B) are supported. The method of making at least one of the ingredient (A) and the ingredient (B) supported by the carrier is not specifically defined. For example, there may be employed a method of mixing at least one of the ingredient (A) and the ingredient (B) with a carrier; a method of treating a carrier with an organic aluminium compound or a halogen-containing silicon compound and then mixing it with at least one of the ingredient (A) and the ingredient (B) in an inert solvent; a method of reacting a carrier with the ingredient (A) and/or the ingredient (B) and an organic aluminium compound or a halogen-containing silicon compound; a method of making the component (A) or the component (B) supported by a carrier and then mixing it with the component (B) or the component (A); a method of mixing a contact reaction product of the ingredient (A) and the ingredient (B) with a carrier; a method of making a carrier coexist in the system in contact reaction of the ingredient (A) and the ingredient (B). In the above reaction, an organic aluminium compound of the ingredient (C) may be added to the system.

The catalyst thus prepared in the manner as above may be once taken out as a solid through solvent evaporation and may be used in polymerization; but may be directly used as such in polymerization. In the present invention, the operation of making at least one of the ingredient (A) and the ingredient (B) supported by a carrier may be attained in the polymerization system to produce the catalyst herein. For example, at least one of the ingredient (A) and the ingredient (B), and a carrier and optionally an organic aluminium compound as the ingredient (C) are put in a reactor, and then an olefin such as ethylene is added thereto and pre-polymerized under normal pressure to 2 MPa at -20 to 200°C for 1 minute to 2 hours or so, thereby producing catalyst particles. This method may be employed here.

In the present invention, the blend ratio of the ingredient (b-1) and the carrier to be used here may be, by mass, preferably from 1/0.5 to 1/1,000, more preferably from 1/1 to 1/50; and the blend ratio of the ingredient (b-2) to the carrier may be, by mass, preferably from 1/5 to 1/10,000, more preferably from 1/10 to 1/500. In case where two or more different types of ingredients are mixed and used as the catalyst ingredient (B), preferably, the blend ratio of each ingredient (B) and the carrier falls within the above range. The blend ratio of the ingredient (A) and the carrier to be used here may be, by mass, preferably from 1/5 to 1/10,000, more preferably from 1/10 to 1/500. The catalyst for use in the present invention may comprise the above ingredient (A) and ingredient (B) and the above ingredient (C) as the main ingredients therein. Preferably, the blend ratio of the ingredient (B) and the carrier, and the blend ratio of the ingredient (A) and the carrier each fall within the above range by mass. In this case, the amount of the ingredient (C) is, in terms of the ratio thereof by mol to the ingredient (A) as described above, preferably from 1/1 to 1/10,000, more preferably from 1/5 to 1/2,000, even more preferably from 1/10 to 1/1,000. When the blend ratio of the ingredient (B) (the ingredient (b-1) or (b-2)) to the carrier, or the blend ratio of the ingredient (A) to the carrier, or the blend ratio of the ingredient (C) to the ingredient (A) oversteps the above range, then the activity may lower. Thus prepared, the mean particle size of the catalyst of the present invention is generally from 2 to 200 µm, preferably from 10 to 150 µm, more preferably from 20 to 100 µm; and the specific surface ratio thereof is generally from 20 to 1,000 m²/g, preferably from 50 to 500 m²/g. When the mean particle size is smaller than 2 µm, then the amount of fine powder in the polymer may increase; but when larger than 200 µm, then the amount of coarse grains in the polymer may increase. When the specific surface area is smaller than 20 m²/g, then the activity may lower; but when larger than 1,000 m²/g, then the bulk density of the polymer may lower. In the catalyst of the present invention, the amount of the transition metal in 100 g of the carrier is, in general, preferably from 0.05 to 10 g, more preferably from 0.1 to 2 g. When the amount of the transition metal falls outside the above range, then the activity may lower. Thus supported by the carrier, the production method for the catalyst is industrially advantageous.

In the present invention, the polymerization method is not specifically defined; and any method of bulk polymerization, solution polymerization, suspension polymerization, slurry polymerization, vapor phase polymerization or the like is employable. Regarding the polymerization condition, the polymerization temperature may be generally from 0 to 200°C, preferably from 30 to 150°C, more preferably from 40 to 120°C. Regarding the ratio of the catalyst to be used relative to the starting monomer, the ratio of starting monomer/ingredient (A) (by mol) is preferably from 1 to 10⁸, more preferably from 100 to 10⁵. Also preferably, the polymerization time is generally from 5 minutes to 20 hours, the reaction pressure is preferably from normal pressure to 0.2 MPaG, more preferably from normal pressure to 0.1 MPaG.

Preferably, the production method in the present invention is a solvent-free system from the viewpoint of the producibility, but a solvent may be used therein. In such a case, for example, usable is an aromatic hydrocarbon such as benzene, toluene, xylene, ethylbenzene, etc.; an alicyclic hydrocarbon such as cyclopentane, cyclohexane, methylcyclohexane, etc.; an aliphatic hydrocarbon such as pentane, hexane, heptane, octane, etc.; a halogenohydrocarbon such as chloroform, dichloromethane, etc. One or more such solvents may be used here either singly or as combined. A monomer such as 1-butene or the like may serve as a solvent.

In the production method for the 1-octene/1-dodecene copolymer of the present invention, hydrogen may be added in polymerization of α-olefin to improve the activity. In case where hydrogen is used, in general, its pressure may be at most 2 MPaG, preferably from 0.001 to 1 MPaG, more preferably from 0.01 to 0.2 MPaG.

In the present invention, the polymerization catalyst may be used in prepolymerization. The prepolymerization may be attained, for example, by contacting a small amount of an olefin with the catalyst ingredient. The method is not specifically defined, and any known method is employable. The olefin for use in the prepolymerization is not specifically defined, and includes, for example, ethylene, an α-olefin having from 3 to 20 carbon atoms, or their mixture. Preferably, the same monomer as that for the polymerization is used also in the prepolymerization. The prepolymerization temperature is generally from -20 to 200°C, preferably from -10 to 130°C, more preferably from 0 to 80°C. In the prepolymerization, an inert hydrocarbon, an aliphatic hydrocarbon, an aromatic hydrocarbon, a monomer or the like may be used as the solvent. Of those, especially preferred are an aliphatic hydrocarbon and an aromatic hydrocarbon. The prepolymerization may be attained in the absence of solvent. The prepolymerization condition is preferably so controlled that the amount of the prepolymerization product could be from 1 to 10,000 g per 1 mmol of the transition metal ingredient in the catalyst, more preferably from 1 to 1,000 g.

In the production method of the present invention, for controlling the molecular weight of the polymer, there may be employed a method of selecting the type and the amount of the individual catalyst ingredients to be used and the polymerization temperature, a method of adding hydrogen, or a method of adding an inert gas such as nitrogen or the like.

In case where an α-olefin polymer is used as a lubricant oil, preferably, the monomer (1-octene, 1-dodecene and their oligomers) is removed after the above-mentioned polymerization step. As the removing method, for example, there may be mentioned a method of evaporating the reaction system under reduced pressure.
Preferably, the 1-octene/1-dodecene copolymer is hydrogenated to produce a hydrogenated 1-octene/1-dodecene copolymer from the viewpoint of improving the stability. The hydrogenation method is not specifically defined, and any known method is employable.

By using the production method of the present invention, a 1-octene/1-dodecene copolymer useful as a high-viscosity lubricant oil excellent in viscosity characteristics and low-temperature characteristics can be produced industrially easily; and further, by controlling the reaction condition, for example, by regulating the reaction temperature, properties of the product can be widely varied.
The above wording "can be produced industrially easily" means that the amount of hydrogen to be used may be small and the degree of pressure to be applied may be low, a relatively mild and easily controllable reaction temperature is used, the process does not require a step of diluting the system with an inert solvent.

### [Second Aspect of the Invention]

The α-olefin (co)polymer of the second aspect of the present invention is produced by the use of a metallocene catalyst and satisfies the following (a') and (b'):
(a') The 2,1-insertion ratio at the polymer terminal, as measured through ¹H-NMR, is at least 30 mol% of the entire molecule,
(b') The mesotriad fraction (mm), as measured through ¹³C-NMR, is at most 50 mol%.

Regarding the polymer terminal structure of the α-olefin (co)polymer of the second aspect of the present invention, preferably, the proportion of chain transfer reaction occurring in 2,1-insertion of monomer is larger. Concretely, the 2,1-insertion ratio at the polymer terminal, as measured through ¹H-NMR, must be at least 30 mol% of the entire molecule, preferably at least 40 mol%, more preferably at least 60 mol%. When the 2,1-insertion ratio at the polymer terminal is less than 30 mol%, then the 2,1-terminal structure decreases and the tertiary hydrogen increases, and therefore, the polymer is poor in oxidation stability.

In the α-olefin (co)polymer of the second aspect of the present invention, the mesotriad fraction (mm), as measured through ¹³C-NMR, must be at most 50 mol%, preferably from 25 to 50 ml%, even more preferably from 30 to 40 mol%. When the mesotriad fraction (mm) is more than 50 mol%, then the polymer may be poor in low-temperature characteristics. More preferably, the mesotriad fraction (mm) is at least 25 mol% from the viewpoint of the low-temperature characteristics.

Preferably, the α-olefin (co)polymer of second aspect of the present invention has a mean short-chain branch number per one molecule of the polymer, as measured through ¹³C-NMR, of at most 2.0, more preferably from 0.2 to 1.6, even more preferably from 0.4 to 1.4. The short-chain branch as referred to herein is meant to indicate the methyl group, the ethyl group and the propyl group in the polymer. When the mean short-chain branch number per one molecule of the polymer is at most 2.0, then the tertiary hydrogen in the polymer decreases and the polymer is excellent in the oxidation stability and the viscosity index. When the mean short-chain branch number is at least 0.2, the polymer has excellent low-temperature characteristics.

Preferably, the α-olefin (co)polymer of the second aspect of the present invention has a double bond amount relative to all the monomer units, as measured through ¹H-NMR, of at most 1.0 mol% from the viewpoint of the oxidation stability since the unsaturated site therein is fully hydrogenated, more preferably at most 0.5 mol%, even more preferably at most 0.3 mol%, still more preferably at most 0.1 mol%.

The 2,1-insertion ratio at the polymer terminal and the double bond amount relative to all the monomer units may be determined according to the method mentioned below. First, according to a known method, the α-olefin (co)polymer is analyzed for ¹H-NMR. In ¹H-NMR, the intensity computed by subtracting the methyl branch-attributable peak from the methyl group-attributable peak is represented by A, and the value computed by diving it by the hydrogen atom number 3, A/3 indicates the total amount of the monomer units in the α-olefin (co)polymer. The double bond includes four structures of vinyl, vinylidene, 2-substituted inner olefin and 3-substituted inner olefin; and the 2-substituted structure is detected at around 5.4 ppm, the 3-substituted structure is at around 5.15 ppm, the vinyl is at around 4.95 ppm and at around 5.8 ppm, and the vinylidene is at around 4.7 ppm. The peak intensity at around 5.4 ppm, around 5.15 ppm, around 4.95 ppm, around 5.8 ppm and around 4.7 ppm is represented by B, C, D, E and F, respectively. Accordingly, the 2,1-insertion ratio at the polymer terminal, X (mol%) is computed as the ratio in the double bond amount according to the following formula: $X = \left(\left(B/2\right)+C\right) / \left(B/2+C+\left(D+E\right)/3+F/2\right) \times 100$

The double bond amount remaining in the α-olefin (co)polymer, Y (mol%) is computed by dividing the sum total of each double bond by the monomer unit sum total, concretely according to the following formula: $Y = \left(B/2+C+\left(D+E\right)/3+F/2\right) / \left(A/3\right) \times 100$

The monomer for use in production of the α-olefin (co)polymer of the second aspect of the present invention is preferably an α-olefin having from 4 to 20 carbon atoms, and concretely, for example, includes 1-butene, 1-hexene, 1-octene, 1-decene, 1-dodecene, 1-tetradecene, 1-hexadecene, 1-octadecene, 1-eicosene, etc. Also usable is a substituent-having α-olefin, such as 4-phenyl-1-butene, 3-methyl-1-pentene, 4-methyl-1-pentene, 3,3-dimethyl-1-pentene, 3,4-dimethyl-1-pentene, 4,4-dimethyl-1-pentene, 4-methyl-1-hexene, 5-methyl-1-hexene, 6-phenyl-1-hexene, etc. Of those, preferred for use herein is an unsubstituted α-olefin having from 6 to 14 carbon atoms, and more preferred is an unsubstituted α-olefin having from 8 to 12 carbon atoms. In particular, from the viewpoint of the viscosity characteristics and the low-temperature characteristics thereof, preferred is a 1-octene/1-dodecene copolymer obtained from 1-octene and 1-dodecene.
When the carbon number of the α-olefin falls within the above range, there hardly occurs a problem of pour point depression or a problem that the polymer is not liquid.

Preferably, the α-olefin (co)polymer of the second aspect of the present invention has a kinematic viscosity at 100°C, as measured according to JIS K2283, of from 2 to 1,000 mm²/sec, more preferably from 10 to 500 mm²/sec, even more preferably from 30 to 200 mm²/sec,. When the kinematic viscosity at 100°C is at least 2 mm²/sec, then the durability of the polymer in use as a lubricant oil ingredient could be enough; and when at most 1,000 mm²/sec, then the polymer could be satisfactory from the energy-saving standpoint.

For example, when the α-olefin (co)polymer of the second aspect of the present invention has a kinematic viscosity at 100°C of about 40 mm²/sec, in general, its pour point is not higher than -40°C and its viscosity index (VI) is at least 170. On the other hand, the α-olefin (co)polymer having a kinematic viscosity at 100°C of about 100 mm²/sec, generally has a pour point of not higher than -35°C and has a viscosity index (VI) of at least 190. The viscosity index (VI) is computed according to the ASTM method D2270.

Preferably, the α-olefin (co)polymer of the second aspect of the present invention has a number-average molecular weight (Mn), as measured through gel permeation chromatography (GPC), of from 200 to 15,000 from the viewpoint of securing long life operation in use as a lubricant oil ingredient and securing energy saving similarly to the above, more preferably from 1,000 to 10,000, even more preferably from 1,500 to 6,000.
For the same reason, the α-olefin (co)polymer of the second aspect of the present invention preferably has a weight-average molecular weight (Mw), as measured through GPC, of from 200 to 30,000, more preferably from 1,000 to 20,000, even more preferably from 3,000 to 10,000.

Preferably, the α-olefin (co)polymer of the second aspect of the present invention has a molecular weight distribution (Mw/Mn) of at most 3.0, more preferably at most 2.0, even more preferably from 1.3 to 2.0. When the molecular weight distribution (Mw/Mn) is at most 3.0, then the high-molecular-weight ingredient decreases to improve the shear stability, and the low-molecular-weight ingredient decreases to lower the volatility.

The α-olefin (co)polymer of the second aspect of the present invention can be produced in the same manner as that for the 1-octene/1-dodecene copolymer of the first aspect of the present invention, except that the above-mentioned various monomers are usable as the starting material. The catalyst for use in producing the α-olefin (co)polymer of the second aspect of the present invention is the same as that for use in producing the 1-octene/1-dodecene copolymer of the first aspect of the present invention described above.
Like the 1-octene/1-dodecene copolymer of the first aspect of the present invention, the α-olefin (co)polymer of the second aspect of the present invention can also be hydrogenated into a hydrogenated α-olefin (co)polymer.

### [Lubricant Oil Composition]

The lubricant oil composition of the present invention contains the above-mentioned 1-octene/1-dodecene copolymer and/or the above-mentioned hydrogenated 1-octene/1-dodecene copolymer, or the above-mentioned α-olefin (co)polymer and/or the above-mentioned hydrogenated α-olefin (co)polymer. Preferably, the composition contains the polymer generally in an amount of from 0.01 to 100% by mass based on the total weight of the composition.

In the lubricant oil composition of the present invention, the form in use of the 1-octene/1-dodecene copolymer, the hydrogenated 1-octene/1-dodecene copolymer, the α-olefin (co)polymer and the hydrogenated α-olefin (co)polymer is not specifically defined. In the composition, the polymer may be used as a base oil, or as an additive. In case where the polymer is used as the base oil, the polymer may broadly cover from a low-molecular-weight one to a high-molecular-weight one. When used as the base oil, the polymer may be used alone or may be used as mixed with any other base oil. The blend ratio is not specifically defined. In general, based on the total amount of the composition, the amount of the polymer as the base oil may be from 1 to 100% by mass. In case where the polymer is used as the additive, for example, it may be used as a viscosity index improver. In this case, preferably, a (hydrogenated) 1-octene/1-dodecene copolymer or a (hydrogenated) α-olefin (co)polymer having a relatively high molecular weight is used. For example, the (hydrogenated) 1-octene/1-dodecene copolymer or the (hydrogenated) α-olefin (co)polymer having a relatively high molecular weight includes those having a number-average molecular weight of more than 5000. The amount of the polymer to be added may be generally from 0.01 to 33% by mass based on the total amount of the composition.

Various known additives may be optionally added to the lubricant oil composition of the present invention, not detracting from the object of the present invention. For example, the additives include phosphorus-containing extreme pressure agents such as phosphates, phosphites, etc.; oily agents such as oleic acid, stearic acid, dimer acid and the like carboxylic acids and their esters, etc.; abrasion inhibitors such as zinc dithiophosphate (ZnDTP, excepting aryl-form), zinc dithiocarbamate (ZnDTC), oxymolybdenum sulfide dithiocarbamate (MoDTC), nickel dithiophosphate (NiDTP), nickel dithiocarbamate (NiDTC), etc.; amine-type or phenol-type antioxidants; metal inactivators such as thiadiazole, benzotriazole, etc.; sludge dispersing agents such as alkenylsuccinic acids and their esters or imides, etc.; corrosion inhibitors such as sorbitan esters, neutral alkaline earth metal sulfonates, phenates and salicylates, etc.; defoaming agents such as dimethylpolysiloxane, polyacrylate, etc.

The lubricant oil composition of the present invention is not specifically defined in point of the use thereof, and, for example, the composition may be used for internal combustion engine oil such as gasoline engine oil (2-cycle, 4-cycle), diesel engine oil, etc.; drive system oil such as gear oil, ATF (automatic transmission fluid), PSF (power steering fluid), buffer oil, etc.; facility oil such as chassis oil, turbine oil, hydraulic oil, machine tool oil, refrigerator oil, etc.; working oil such as rolling oil, cutting oil, heat treatment oil, etc.; grease, etc.

### [Description of Embodiments]

Now the present invention is described in more detail with reference to the following Examples; however, the present invention should not be restricted at all by these Examples.

The physical properties of α-olefin polymer were measured and evaluated according to the following methods.
(1) Pour Point:
   Measured according to JIS K 2269.
(2) Kinematic Viscosity and Viscosity Index:
   The kinematic viscosity was measured according to JIS K2283. The viscosity index is computed from the kinematic viscosity, according to JIS K 2283.
(3) Number-Average Molecular Weight and Molecular Weight Distribution (Mw/Mn):
   Using JASCO's GPC-900 (column unit: TOSOH TSK-GEL MULTIPORE HXL-M (2 columns) + Shodex KF801 (one column)) with a solvent of tetrahydrofuran, the polymer sample was analyzed at 40°C to determine the data thereof based on polystyrene.
(4) Mesotriad Fraction (mm), Terminal Structure:
   The polymer sample was analyzed through ¹³C-NMR, according to the method described in "Macromolecules 24, 2334 (1991); Polymer, 30, 1350 (1989)".
(5) Double Bond Amount:
   Using JEOL's BURUKER 500 MHz NMR apparatus, the polymer sample was dissolved in a heavy chloroform solvent and analyzed through ¹H-NMR.
   In ¹H-NMR, the intensity computed by subtracting the methyl branch-attributable peak from the methyl group-attributable peak is represented by A, and the value computed by diving it by the hydrogen atom number 3, A/3 indicates the total amount of the monomer units in the copolymer. The double bond includes four structures of vinyl, vinylidene, 2-substituted inner olefin and 3-substituted inner olefin; and the 2-substituted structure is detected at 5.4 ppm, the 3-substituted structure is at 5.15 ppm, the vinyl is at 4.95 ppm and at 5.8 ppm, and the vinylidene is at 4.7 ppm. The peak intensity at around 5.4 ppm, around 5.15 ppm, around 4.95 ppm, around 5.8 ppm and around 4.7 ppm is represented by B, C, D, E and F, respectively. The value computed by dividing the peak intensity by the number of the hydrogen atoms bonding to the double bond carbon, (D + E)/3, B/2, C, F/2 each represent the amount of the double bond. The double bond amount Y (%) remaining in the copolymer is computed by dividing the sum total of the double bonds by the monomer unit sum total, as follows: $Y = \left(B/2+C+\left(D+E\right)/3+F/2\right) / \left(A/3\right) \times 100$
(6) Number of Double Bonds in One Molecule:
   From the number-average molecular weight Mn obtained through GPC and the mean molecular weight F constituting the copolymer, the mean polymerization degree P is computed as follows: $P = \left(Mn/F\right)$

The mean monomer molecular weight F can be obtained from the copolymerization composition. Concretely, when the dodecene content is represented by X mol%, then F is computed as follows: $F = 168 \times X / 100 + 112 \times \left(1-X/100\right)$

The number N of the double bonds in one molecule is computed by multiplying the double bond amount E by the mean polymerization degree, as follows: $N = P \times Y \times 1 / 100$

(7) Ignition Point:
   Measured according to JIS 2265, using a Cleveland open-cup tester.
(8) Mean Short-Chain Branch Number in One Molecule of Polymer:
   Obtained according to the following formula: $Mean short - chain branch number in one molecule of polymer = \left(mean polymerization degree P\right) \times \left(mean monomer carbon number\right) \times \left(short-chain branch ratio\right)$

### (Short-Chain Branch Ratio)

Using JEOL's BURUKER 500 MHz NMR apparatus, the polymer sample was dissolved in a heavy chloroform solvent and analyzed through ¹³C-NMR.

Test Condition: 30-degree pulse; pulse repetition time, 10 sec; cumulated number, 1000 times; 26°C.

Analysis: from 15 to 20.8 ppm was identified as methyl group, from 14.5 to 15 ppm was as the methyl carbon of propyl group, and from 10.3 to 13.5 ppm was as the methyl carbon of ethyl group.

Short-Chain Branch Ratio (number/total 1000 carbons), computed as follows: $Total areal intensity of methyl group carbons \left(methyl group+ethyl group+propyl group\right) ⁢ \left(total area intensity at 10.3 to 46 ppm\right) \times 1000.$
(9) Oxidation Stability Test:
   Tested according to a rotating bomb oxidation test of JIS K2514 (RBOT test).

### Production Example 1-1:

### [Production of (1,1'-dimethylsilylene)(2,2'-dimethylsilylene)-bis(cyclopentadienyl)zirconium dichloride]

About 13.8 g (600 mmol) of metal Na and 400 ml of dry THF (tetrahydrofuran) were put into a nitrogen-purged, 1000-ml three-neck flask, and stirred therein at 0°C. After 5 minutes, 1 to 2 ml of cyclopentadiene was dropwise added thereto, and when the hydrogen generation stopped, 1 to 2 ml of additional cyclopentadiene was added thereto. This was repeated, and 50 ml (600 mmol) in total of cyclopentadiene was added. The reaction solution changed from colorless transparent to pale pink. THF was removed through evaporation under reduced pressure, and the crystal was washed twice with hexane and dried to solidness under reduced pressure to give cyclopentadienyl sodium as a pink powder.

457 ml of THF was added to 43.0 g (480 mmol) of cyclopentadienyl sodium at 0°C and stirred. This was cooled to -78°C, and 29.2 ml (480 mmol) of dichlorodimethylsilane was gradually and dropwise added thereto. The solution changed from pink to white. This was stirred overnight at room temperature, then THF was evaporated away to give a yellow powder [compound (1)].

The compound (1) was extracted with 150 ml of hexane, and the supernatant was transferred into a nitrogen-purged, 1000-ml three-neck flask. This was cooled to -78°C, and 175.8 ml (480 mmol) of n-butyllithium (2.73 mol/1) was dropwise added thereto. The reaction solution changed from yellow to milky white. This was stirred overnight at room temperature, and filtered, and the supernatant was evaporated away. The resulting white solid was washed with 100 ml of hexane. This was dried under reduced pressure to give a dilithium salt [compound (2)] as a white powder.

50 ml of diethyl ether and 100 ml of hexane were added to 27.4 g (137 mmol) of the compound (2). This was cooled to -78°C, and 16.7 ml (137 mmol) of dichlorodimethylsilane was gradually and dropwise added thereto. This was stirred at room temperature for 5 hours, then the precipitate was removed through filtration, and the filtrate was concentrated. This was recrystallized from hexane to give 4.05 g (yield 12%) of a compound (3) as a needle-like transparent crystal.

4.05 g (16.6 mmol) of the compound (3) was dissolved in 60 ml of hexane in a nitrogen-purged, 200-ml Schlenk flask, and stirred therein. This was cooled to -78°C, and 12.1 ml (33.1 mmol) of n-butyllithium (2.73 mol/1) was dropwise added thereto, and stirred overnight at room temperature. The solvent was evaporated away from the cloudy solution under reduced pressure, and the precipitate was washed with 20 ml of hexane. This was dried under reduced pressure to give a dilithium salt [compound (4)] as a white powder.

34 ml of toluene was added to the compound (4). A suspension of zirconium tetrachloride (2.9 g, 16.6 mmol) in toluene (51 ml) was dropwise added to the previous suspension at -20°C. This was stirred overnight at room temperature, and the solvent was evaporated away under reduced pressure to give the intended substance [compound (5)]. The compound (5) was extracted with 30 ml of dichloromethane, and the filtrate was concentrated. This was washed with 10 ml of hexane, then dried under reduced pressure to give 500 ml of the compound (5) (yield 7.4%).
Its ¹N-NMR gave the following data.
¹N-NMR (500 MHz, CDCl₃) δ: 0.49 [6H, s, (CH₃)₂Si], 0.87 [6H, s, (CH₃)₂Si], 6.40 (2H, t, -CH-), 6.89 (4H, d, -CH-)

### Example 1-1:

A stainless autoclave having an inner capacity of 1 liter was fully dried and purged with nitrogen, and then 200 ml of 1-dodecene, 200 ml of 1-octene and then 0.3 mmol of triisobutylaluminium were put thereinto, and heated up to 105°C. 1.6 ml of a separately prepared catalyst mixture (this was prepared by putting 0.20 mmol of triisobutylaluminium (0.5 mmol/ml toluene solution; 0.4 ml), 4 µmol of (1,1'-dimethylsilylene)(2,2'-dimethylsilylene)-bis(cyclopentadienyl)zirconium chloride obtained in Production Example 1-1 (5 µmol/ml toluene solution, 0.8 ml), and 0.08 mmol (64 mg) of powdery N,N-dimethylanilinium tetrakis(pentafluorophenyl)borate into a 10-ml glass-made Schlenk flask in a nitrogen atmosphere, then stirring them therein at room temperature for about 1 minute, and thereafter further adding thereto 1 ml of 1-octene and 1 ml of 1-dodecene and stirring them at room temperature for 1 hour) was put into the autoclave, then 0.05 MPaG of hydrogen was introduced thereinto, and the polymerization was started. After 120 minutes, 1.6 ml of the remaining catalyst mixture was added to it followed by further reaction at 105°C for 120 minutes. Then, 10 ml of methanol was added to it to stop the polymerization. The contents were taken out, and put into 200 ml of aqueous 1 mas.% NaOH solution, and stirred therein. The solution was transferred into a separatory funnel, and the organic layer was collected. The organic layer was washed with water, and filtered through Toyo Filter Paper's filter paper 2C to remove the solid matter. The resulting solution was evaporated with a rotary evaporator (under a reduced pressure of about 1.0 × 10⁻⁴ MPa, in an oil bath at 100°C) to remove toluene, the starting material, methanol and others, thereby giving 275 g of a colorless transparent liquid. Using a thin film distillation apparatus (Shibata Scientific's Molecule Distillation Apparatus, MS-300 Special Model, with high-vacuum degassing unit DS-212Z), this was distilled under a reduced pressure of 5 × 10⁻⁶ MPa at 180°C to remove the fraction having at most 24 carbon atoms, thereby collecting 239 g of a polymer. The collected polymer was analyzed according to the above-mentioned analysis methods, and the results are shown in Table 1. After the distillation, the polymer was put into a stainless autoclave having an inner capacity of 1 liter, and a stabilized nickel catalyst (Sakai Chemical Industry's SN750) was added thereto in an amount of 1% by mass, and then the polymer was reacted for 6 hours in hydrogen at 2 MPa at 130°C. After the reaction, this was cooled to around 80°C, then the contents were taken out, and filtered through a 1-µm filter at 70°C to remove the catalyst ingredients, thereby collecting 239 mg of a hydrogenated polymer. This was analyzed according to the above-mentioned analysis methods, and the results are shown in Table 1.

### Example 1-2:

209 g of a colorless transparent, hydrogenated polymer, from which the fraction having at most 24 carbon atoms had been removed, was obtained according to the same process as in Example 1-1, for which, however, the polymerization temperature was 90°C. The results obtained according to the above-mentioned analysis methods are shown in Table 1.

### Example 1-3:

238 g of a colorless transparent, hydrogenated polymer, from which the fraction having at most 24 carbon atoms had been removed, was obtained according to the same process as in Example 1-1, for which, however, the amount of 1-dodecene was 260 ml and the amount of 1-octene was 140 ml. The results obtained according to the above-mentioned analysis methods are shown in Table 1.

### Example 1-4:

208 g of a colorless transparent, hydrogenated polymer, from which the fraction having at most 24 carbon atoms had been removed, was obtained according to the same process as in Example 1-3, for which, however, the polymerization temperature was 90°C. The results obtained according to the above-mentioned analysis methods are shown in Table 1.

### Example 1-5:

240 g of a colorless transparent, hydrogenated polymer, from which the fraction having at most 24 carbon atoms had been removed, was obtained according to the same process as in Example 1-1, for which, however, the amount of 1-dodecene was 140 ml and the amount of 1-octene was 260 ml. The results obtained according to the above-mentioned analysis methods are shown in Table 1.

### Example 1-6:

215 g of a colorless transparent, hydrogenated polymer, from which the fraction having at most 24 carbon atoms had been removed, was obtained according to the same process as in Example 1-5, for which, however, the polymerization temperature was 90°C. The results obtained according to the above-mentioned analysis methods are shown in Table 1.

### Example 1-7:

212 g of a colorless transparent, hydrogenated polymer, from which the fraction having at most 24 carbon atoms had been removed, was obtained according to the same process as in Example 1-1, for which, however, the amount of 1-dodecene was 320 ml, the amount of 1-octene was 80 ml, and the polymerization temperature was 90°C. The results obtained according to the above-mentioned analysis methods are shown in Table 1.

### Example 1-8:

203 g of a colorless transparent, hydrogenated polymer, from which the fraction having at most 24 carbon atoms had been removed, was obtained according to the same process as in Example 1-1, for which, however, the amount of 1-dodecene was 280 ml, the amount of 1-octene was 120 ml, and the polymerization temperature was 90°C. The results obtained according to the above-mentioned analysis methods are shown in Table 1.

### Example 1-9:

199 g of a colorless transparent, hydrogenated polymer, from which the fraction having at most 24 carbon atoms had been removed, was obtained according to the same process as in Example 1-1, for which, however, the amount of 1-dodecene was 300 ml, the amount of 1-octene was 100 ml, and the polymerization temperature was 90°C. The results obtained according to the above-mentioned analysis methods are shown in Table 1.

### Example 1-10:

A stainless reactor having an inner capacity of 1 liter was fully dried and purged with nitrogen, and then 166 ml of 1-octene, 234 ml of 1-dodecene and then 0.2 mmol of triisobutylaluminium and 0.008 mmol of N,N-dimethylanilinium tetrakis(pentafluorophenyl)borate were put thereinto, stirred for about 1 minute, and heated up to 40°C. Next, 0.004 mmol of bis(2-methylindenyl)zirconium dichloride was put into it, then 0.02 MPaG of hydrogen was introduced thereinto, and the polymerization was started. After this was reacted at 40°C for 120 minutes, 2 ml of methanol was added thereto to stop the polymerization.
The contents were taken out into a 1-liter stainless container, then 200 ml of toluene and 200 ml of aqueous 1 mas.% NaOH solution were added thereto and stirred for 1 hour. This was statically kept as such for 1 hour, then the aqueous phase was taken out, 200 ml of pure water was newly added thereto, stirred for 1 hour, then statically kept as such for 1 hour, and the aqueous phase was taken out. This operation was repeated twice. The organic layer was filtered through a 2-micrometer filter, then transferred into an egg-plant type flask, and the light components of toluene, the starting material, methanol and others were evaporated away under a reduced pressure of about 3.0 × 10⁻¹ MPa at 140°C, thereby giving 204 g of a colorless transparent viscous liquid. Using a thin film distillation apparatus (Shibata Scientific's Molecule Distillation Apparatus, MS-300 Special Model), 200 g of the obtained viscous liquid was distilled under a reduced pressure of 5 × 10⁻⁶ MPa at 180°C, thereby giving 168 g of a colorless transparent viscous liquid from which the fraction having at most 20 carbon atoms had been completely removed.
150 g of the obtained viscous liquid and 200 ml of heptane were put into a stainless autoclave having an inner capacity of 2 liters, and a stabilized nickel catalyst (Sakai Chemical Industry's SN750) was added thereto in an amount of 1% by mass relative to the viscous liquid, and then the polymer was reacted for 6 hours in hydrogen at 0.7 MPa at 85°C. After the reaction, this was cooled to around 40°C, then the contents were taken out, and filtered through a 2-µm filter to remove the catalyst ingredients. Using a rotary evaporator, heptane was completely evaporated away to give 148 g of a hydrogenated polymer. This was analyzed according to the above-mentioned analysis methods, and the results are shown in Table 1.

### Example 1-11:

78 g of a colorless transparent viscous liquid, from which the fraction having at most 20 carbon atoms had been completely removed, was obtained according to the same process as in Example 1-10, for which, however, isopropylidene(cyclopentadienyl)(fluorenyl)zirconium dichloride was used in place of bis(2-methylindenyl)zirconium dichloride, and the heating temperature and the polymerization temperature were 80°C. 75 g of the obtained viscous liquid was hydrogenated in the same manner as in Example 1-10 to give 72 g of a hydrogenated polymer. The results obtained according to the above-mentioned analysis methods are shown in Table 1.

### Example 1-12:

150 g of a colorless transparent viscous liquid, from which the fraction having at most 20 carbon atoms had been completely removed, and 147 g of a hydrogenated polymer were obtained according to the same process as in Example 1-10, for which, however, bis(indenyl)zirconium dichloride was used in place of bis (2-methylindenyl)zirconium dichloride, the amount of 1-octene was 300 ml and the amount of 1-dodecene was 100 ml, and the heating temperature and the polymerization temperature were 50°C. The results obtained according to the above-mentioned analysis methods are shown in Table 1.

### Comparative Example 1-1:

236 g of a colorless transparent, hydrogenated polymer, from which the fraction having at most 24 carbon atoms had been removed, was obtained according to the same process as in Example 1-1, for which, however, 160 ml of 1-tetradecene and 240 ml of 1-hexene were used as monomers. The results obtained according to the above-mentioned analysis methods are shown in Table 2.

### Comparative Example 1-2:

215 g of a colorless transparent, hydrogenated polymer, from which the fraction having at most 24 carbon atoms had been removed, was obtained according to the same process as in Example 1-1, for which, however, 267 ml of 1-dodecene and 133 ml of 1-hexene were used as monomers.
The results obtained according to the above-mentioned analysis methods are shown in Table 2.

### Comparative Example 1-3:

183 g of a colorless transparent, hydrogenated polymer, from which the fraction having at most 24 carbon atoms had been removed, was obtained according to the same process as in Example 1-1, for which, however, 300 ml of 1-dodecene and 100 ml of 1-hexene were used as monomers, and the polymerization temperature was 80°C. The results obtained according to the above-mentioned analysis methods are shown in Table 2.

[Table 1]

**Table 1-1**

| | Complex | Reaction Condition | | | | | | Copolymer before Hydrogenation | | | | | | |
|---|---|---|---|---|---|---|---|---|---|---|---|---|---|---|
| | | Monomer Ratio | | | | Hydrogen Pressure | Temperature | Mn | Mw | Mw/Mn | Mean Polymerization Degree P | Double Bond Amount | Number of Double Bonds in One Molecule | 2,1-Insertion Ratio at Terminal |
| | | 1-octene | | 1-dodecene | | | | | | | | | | |
| | | vol% | mol% | vol% | mol% | MPa | °C | - | - | - | - | mol% | number | % |
| Example 1-1 | A | 50 | 59 | 50 | 41 | 0.05 | 105 | 2738 | 3816 | 1.39 | 20 | 5.3 | 1.08 | 68 |
| Example 1-2 | A | 50 | 59 | 50 | 41 | 0.05 | 90 | 4030 | 6131 | 1.52 | 30 | 3.0 | 0.91 | 70 |
| Example 1-3 | A | 35 | 43 | 65 | 57 | 0.05 | 105 | 2927 | 4097 | 1.40 | 20 | 5.2 | 1.06 | 68 |
| Example 1-4 | A | 35 | 43 | 65 | 57 | 0.05 | 90 | 4513 | 6705 | 1.49 | 31 | 6.2 | 2.95 | 69 |
| Example 1-5 | A | 75 | 72 | 25 | 28 | 0.05 | 105 | 2683 | 3650 | 1.36 | 21 | 5.2 | 1.09 | 71 |
| Example 1-6 | A | 75 | 72 | 25 | 28 | 0.05 | 90 | 4110 | 6114 | 1.49 | 32 | 3.0 | 0.96 | 69 |
| Example 1-7 | A | 20 | 26 | 80 | 74 | 0.05 | 90 | 5181 | 8990 | 1.74 | 26 | 3.1 | 0.81 | 70 |
| Example 1-8 | A | 30 | 38 | 70 | 62 | 0.05 | 90 | 5157 | 8643 | 1.68 | 35 | 3.2 | 1.12 | 69 |
| Example 1-9 | A | 25 | 32 | 75 | 68 | 0.05 | 90 | 5313 | 8878 | 1.67 | 35 | 3.2 | 1.14 | 69 |
| Example 1-10 | B | 42 | 58 | 50 | 50 | 0.02 | 40 | 2383 | 4301 | 1.80 | 17 | - | - | - |
| Example 1-11 | C | 42 | 58 | 50 | 50 | 0.8 | 80 | 4935 | 8561 | 1.73 | 35 | - | - | - |
| Example 1-12 | D | 75 | 25 | 72 | 28 | 0.02 | 50 | 2111 | 3398 | 1.61 | 17 | - | - | - |

| | | | | | | | | | | | | | | |
|---|---|---|---|---|---|---|---|---|---|---|---|---|---|---|
| [Complex] A: (1,1'-dimethylsilylene)(2,2'-dimethylsilylene)-bis(cyclopentadienyl)zirconium dichloride B: bis(2-methylindenyl)zirconium dichloride C: isopropylidene(cyclopentadienyl)(fluorenyl)zirconium dichloride D: bis(indenyl)zirconium dichloride | | | | | | | | | | | | | | |

[Table 2]

**Table 1-2**

| | Copolymer after Hydrogenation | | | | | | |
|---|---|---|---|---|---|---|---|
| | Yield | Double Bond Amount | (mm) | Kinematic Viscosity (mm²/sec) | | Viscosity Index | Pour Point |
| | (g) | (mol%) | (mol%) | 40°C | 100°C | - | °C) |
| Example 1-1 | 239 | 0.1> | 35 | 462 | 53 | 181 | -42.5 |
| Example 1-2 | 209 | 0.1> | 36 | 1258 | 124 | 203 | -40 |
| Example 1-3 | 238 | 0.1> | 36 | 462 | 53 | 183 | -42.5 |
| Example 1-4 | 208 | 0.1> | - | 1195 | 122 | 205 | -40 |
| Example 1-5 | 240 | 0.1> | 34 | 521 | 57 | 177 | -40 |
| Example 1-6 | 215 | 0.1> | - | 1472 | 139 | 203 | -37.5 |
| Example 1-7 | 212 | 0.1> | 33 | 1067 | 117 | 212 | -37.5 |
| Example 1-8 | 203 | 0.1> | - | 1078 | 115 | 199 | -37.5 |
| Example 1-9 | 199 | 0.1> | - | 1055 | 117 | 205 | -37.5 |
| Example 1-10 | 148 | 0.1> | 38 | 437 | 51 | 180 | -45 |
| Example 1-11 | 72 | 0.1> | 39 | 1413 | 141 | 212 | -37.5 |
| Example 1-12 | 147 | 0.1> | 38 | 320 | 39 | 175 | -45 |

[Table 3]

**Table 2-1**

| | Reaction Condition | | | | | | | | Copolymer before Hydrogenation | | | | |
|---|---|---|---|---|---|---|---|---|---|---|---|---|---|
| | Monomer Ratio | | | | | | Hydrogen Pressure | Temperature | Mw/Mn | Mean Polymerization Degree P | Double Bond Amount | Number of Double Bonds in One Molecule | 2,1-Insertion Ratio at Terminal |
| | 1-hexene | | 1-dodecene | | 1-tetradecene | | | | | | | | |
| | vol% | mol% | vol% | mol% | vol% | mol% | MPa | °C | - | - | mol% | number | % |
| Comparative Example 1-1 | 60 | 57 | 0 | 0 | 40 | 43 | 0.05 | 105 | 1.67 | 19.7 | 5.2 | 1.03 | 67 |
| Comparative Example 1-2 | 33 | 30 | 67 | 70 | 0 | 0 | 0.05 | 105 | 1.72 | 22.7 | 4.1 | 0.93 | 71 |
| Comparative Example 1-3 | 25 | 23 | 75 | 77 | 0 | 0 | 0.05 | 80 | 1.72 | 63.2 | 1.6 | 1.01 | 68 |

[Table 4]

**Table 2-2**

| | Copolymer after Hydrogenation | | | | | | |
|---|---|---|---|---|---|---|---|
| | Yield | Double Bond Amount | (mm) | Kinematic Viscosity (mm²/sec) | | Viscosity Index | Pour Point |
| | (g) | (mol%) | (mol%) | 40°C | 100°C | - | (°C) |
| Comparative Example 1-1 | 236 | 0.1> | 35 | 454 | 46 | 148 | -39 |
| Comparative Example 1-2 | 215 | 0.1> | 36 | 661 | 54 | 132 | -40 |
| Comparative Example 1-3 | 183 | 0.1> | 35 | 3842 | 296 | 215 | -30 |

Fig. 1 shows the relationship between the viscosity index and the pour point of the copolymers obtained in Examples 1-1 to 1-9 and Comparative Examples 1-1 to 1-3. From this, it is known that the 1-octene/1-dodecene copolymers of the present invention are excellent in the balance between the viscosity characteristics and the low-temperature characteristics thereof as compared with the copolymers obtained by the use of the other monomers.

### Example 2-1:

A stainless autoclave having an inner capacity of 2 liters was fully dried and purged with nitrogen, and then 780 ml of 1-dodecene and 420 ml of 1-octene were put thereinto and heated up to 105°C in a nitrogen atmosphere. Next, in the nitrogen atmosphere, 0.3 ml of triisobutylaluminium (1 mmol/ml toluene solution, 0.3 ml), 15 µmol of (1,1'-dimethylsilylene)(2,2'-dimethylsilylene)-bis(cyclopentadienyl) zirconium chloride (5 µmol/ml toluene solution, 3 ml) and 60 µmol of N,N-dimethylanilinium tetrakis(pentafluorophenyl)borate (20 µmol/ml toluene slurry, 3 ml) were put into it and stirred for a while, and then 0.05 MPaG of hydrogen was introduced thereinto, and the polymerization was started. After this was reacted at 105°C for 120 minutes, 10 ml of methanol was put into it to stop the polymerization. The contents were taken out, and put into 500 ml of aqueous 1 mas.% NaOH solution, and stirred therein. The solution was transferred into a separatory funnel, and the organic layer was collected. The organic layer was washed with water, and filtered through Toyo Filter Paper's filter paper 2C to remove the solid matter. The resulting solution was evaporated with a rotary evaporator (under a reduced pressure of about 1.0 × 10⁻⁴ MPa, in an oil bath at 100°C) to remove toluene, the starting material, methanol and others, thereby giving 666 g of a colorless transparent liquid. Using a thin film distillation apparatus (Shibata Scientific's Molecule Distillation Apparatus, MS-300 Special Model, with high-vacuum degassing unit DS-212Z), this was distilled under a reduced pressure of 5 × 10⁻⁶ MPa at 180°C to remove the fraction having at most 24 carbon atoms, thereby collecting 631 g of a polymer. The collected polymer was put into a stainless autoclave having an inner capacity of 2 liters, then a stabilized nickel catalyst (Sakai Chemical Industry's SN750) was added thereto in an amount of 1% by mass, and the polymer was reacted for 6 hours in hydrogen at 2 MPa at 130°C. After the reaction, this was cooled to around 80°C, then the contents were taken out, and filtered through a 1-µm filter at 70°C to remove the catalyst ingredients, thereby collecting 260 mg of a hydrogenated polymer. The physical data of the polymer and the hydrogenated polymer are shown in Table 3.

### Example 2-2:

A stainless reactor having an inner capacity of 107 liters was fully dried and purged with nitrogen, and then 40 liters of 1-decene and then 20 mmol of triisobutylaluminium were put thereinto, and heated up to 88°C. 80 ml of a separately prepared catalyst mixture (this was prepared by putting 700 ml of dewatered toluene, 40 mmol of triisobutylaluminium, 0.8 mmol of (1,1'-dimethylsilylene)(2,2'-dimethylsilylene)-bis(cyclopentadienyl)zirconium chloride and 1.6 mmol of powdery N,N-dimethylanilinium tetrakis(pentafluorophenyl)borate into a 2-liter glass-made Schlenk flask in a nitrogen atmosphere, then stirring them therein at room temperature for about 1 minute, and thereafter further adding thereto 100 ml of 1-decene and stirring them at room temperature for 1 hour) was put into the reactor, then 0.02 MPaG of hydrogen was introduced thereinto, and the polymerization was started at an elevated temperature of 110°C. After this, 80 ml of the catalyst mixture was added to the reactor every 60 minutes, and this was reacted at 110°C for 300 minutes, and then 100 ml of methanol was put into it to stop the polymerization.

The contents were taken out into two, 100-liter stainless chambers in an amount of 20 liters each; and 20 liters of toluene and 20 liters of aqueous 1 mas.% NaOH solution were added to each reactor, and stirred for 1 hour. After this was statically left as such for 1 hour, the aqueous phase was discharged out, and 20 liters of pure water was newly added thereto, stirred for 1 hour, and then statically left as such for 1 hour, and the aqueous phase was discharged out. This operation was repeated twice. The organic layer was filtered through a 2-µm filter, and transferred into a stainless reactor having an inner capacity of 107 liters, and under a reduced pressure of about 3.0 × 10⁻¹ MPa at 140°C, the light fraction of toluene, the starting material, methanol and others was evaporated away, thereby giving 24.3 kg of a colorless transparent viscous liquid. 5 kg of the thus-obtained viscous liquid was distilled using a thin film distillation apparatus (UIC's short-process distillation apparatus, KDL-5) under a reduced pressure of 5 × 10⁻⁶ MPa at 180°C, thereby giving 4.7 kg of a colorless transparent viscous liquid from which the fraction having at most 20 carbon atoms had been completely removed.

3.0 kg of the thus-obtained viscous liquid was put into a stainless autoclave having an inner capacity of 5 liters, and a stabilized nickel catalyst (Sakai Chemical Industry's SN750) was added thereto in an amount of 1% by mass, and then the polymer was reacted for 6 hours in hydrogen at 2 MPa at 130°C. After the reaction, this was cooled to around 80°C, then the contents were taken out, and filtered through a 2-µm filter at 70°C to remove the catalyst ingredients, thereby collecting 3.0 kg of a hydrogenated polymer. The physical properties of the polymer and the hydrogenated polymer are shown in Table 3.

### Comparative Example 2-1:

A commercially-available poly-α-olefin, INEOS' Durasyn® 174 was analyzed according to the above-mentioned analysis methods. The results are shown in Table 3.

[Table 5]

**Table 3-1**

| | Monomer | | | Polymer before Hydrogenation | | | | | | | | | |
|---|---|---|---|---|---|---|---|---|---|---|---|---|---|
| | C8 | C10 | C12 | (mm) (mol%) | Mw | Mn | Mw/Mn | Mean Polymerization Degree P | 2, 1-Insertion Ratio at Terminal (mol%) | Mean Short-Chain Branch Number per Molecule of Polymer (number) | Ratio of Branches (mol%) | | |
| | | | | | | | | | | | methyl group | ethyl group | propyl group |
| Example 2-1 | 420 mL | - | 780 mL | 35.9 | 5867 | 3599 | 1.63 | 16 | 71 | unfound | unfound | unfound | unfound |
| Example 2-2 | - | 40 L | - | 35.9 | 4676 | 2941 | 1.59 | 13 | 69 | 1.0 | 95 | 5 | 0 |
| Comparative Example 2-1 | unfound | | | unfound | 3618 | 2079 | 1.74 | 9 | unfound | 2.6 | 73 | 14 | 13 |

[Table 6]

**Table 3-2**

| | Copolymer after Hydrogenation | | | | | |
|---|---|---|---|---|---|---|
| | Kinematic Viscosity (mm²/sec) | | Double Bond Amount (mol%) | Viscosity Index | Ignition Point (°C) | Pour Point (°C) |
| | 40°C | 100°C | | | | |
| Example 2-1 | 440 | 51 | 0.1> | 179 | 282 | -42.5 |
| Example 2-2 | 409 | 49 | 0.5 | 182 | 274 | -42.5 |
| Comparative Example 2-1 | 400 | 40 | 0.1> | 150 | 278 | -40.0 |

### Examples 2-3 to 2-4, and Comparative Example 2-2:

Using the α-olefin (co)polymer of Examples 2-1 to 2-2 and Comparative Example 2-1, a lubricant oil composition was prepared as in Table 4.

Thus prepared, the sample oil was tested and evaluated for the properties thereof according to the above-mentioned methods. The results are shown in Table 4.

[Table 7]

**Table 4**

| | (Co)polymer | | Ester Compound | Additive | 40°C Kinematic Viscosity | 100°C Kinematic Viscosity | Viscosity Index | Ignition Point | Pour Point | Oxidation Stability |
|---|---|---|---|---|---|---|---|---|---|---|
| | | (mas%) | (mas%) | (mas%) | (mm²/sec) | (mm²/sec) | | (°C) | (°C) | (min) |
| Example 2-3 | Example 2-1 | 86 | 10 | 4 | 342 | 40.1 | 170 | 256 | unfound | 3162 |
| Example 2-4 | Example 2-2 | 86 | 10 | 4 | 361 | 42.6 | 173 | n.d. | unfound | 2039 |
| Comparative Example 2-2 | Comparative Example 2-1 | 86 | 10 | 4 | 318 | 32.3 | 142 | 256 | -40.0 | 1800 |

Ester compound: ester of trimethylolpropane and isostearic acid (molar ratio, 1/2).

Additive: (octadecyl-3-(3,5-di-tert-butyl-4-hydroxyphenyl)propionate, 4,4'-dioctyldiphenylamine, dialkylaminomethylbenzotriazole.

### Example 2-5:

A stainless reactor having an inner capacity of 2 liters was fully dried and purged with nitrogen, then 400 ml of 1-octene and 600 ml of 1-dodecene were added thereto, and thereafter 0.5 mmol of triisobutylaluminium was added, and heated up to 105°C. A separately prepared catalyst mixture (this was prepared by putting 160 ml of dewatered toluene, 40 mmol of triisobutylaluminium, 0.8 mmol of (1,1'-dimethylsilylene) (2,2'-dimethylsilylene)-bis(cyclopentadienyl)zirconium chloride and 1.6 mmol of powdery N,N-dimethylanilinium tetrakis(pentafluorophenyl)borate into a 500 ml glass-made Schlenk flask in a nitrogen atmosphere, then stirring them therein at room temperature for about 1 minute, and thereafter further adding thereto 200 ml of 1-octene and stirring them at room temperature for 1 hour) was put into the reactor in an amount of 2 µmol on the basis of the metallocene compound therein, then 0.02 MPaG of hydrogen was introduced into it, and the system was heated up to 105°C and the polymerization was started. After this, 0.5 ml of the catalyst mixture was added to the reactor every 60 minutes, and this was reacted at 105°C for 300 minutes, and then 100 ml of methanol was put into it to stop the polymerization.

0.25 ml of aqueous 1 mas% NaOH solution was added to it and stirred for 1 hour. After this was statically left as such for 1 hour, the aqueous phase was discharged out, and 0.25 liters of pure water was newly added thereto, stirred for 1 hour, and then statically left as such for 1 hour, and the aqueous phase was discharged out. This operation was repeated twice. The organic layer was filtered through a 2-µm filter, and under a reduced pressure of about 3.0 × 10⁻¹ MPa at 140°C, the light fraction of toluene, the starting material, methanol and others was evaporated away, thereby giving 0.60 kg of a colorless transparent viscous liquid. The thus-obtained viscous liquid was distilled using a thin film distillation apparatus (UIC's short-process distillation apparatus, KDL-5) under a reduced pressure of 5 × 10⁻⁶ MPa at 180°C, thereby giving 0.54 kg of a colorless transparent viscous liquid (polymer) from which the fraction having at most 20 carbon atoms had been completely removed.

0.5 kg of the thus-obtained viscous liquid was put into a stainless autoclave having an inner capacity of 1 liter, and a stabilized nickel catalyst (Sakai Chemical Industry's SN750) was added thereto in an amount of 1% by mass, and then the polymer was reacted for 6 hours in hydrogen at 2 MPa at 130°C. After the reaction, this was cooled to around 80°C, then the contents were taken out, and filtered through a 1-µm filter at 70°C to remove the catalyst ingredients, thereby collecting 0.5 kg of a hydrogenated polymer. The polymer and the hydrogenated polymer were analyzed according to the above-mentioned analysis methods, and their physical data are shown in Table 5.

The oxidation stability test is as follows: 5 g of a composition comprising 99% by mass of the hydrogenated polymer obtained in the manner as above, and, as antioxidant, 0.5% by mass of Irganox L-107 and 0.5% by mass of Irganox L-57 was mixed with 30 mg of a catalyst, copper powder. One ml of water was put into the chamber space, and the composition was tested according to a rotating bomb oxidation test of JIS K2514 (RBOT test) as described above.

### Example 2-6:

In the same manner as in Example 3-1 except that the reaction temperature in polymerization was changed to 85°C, 0.66 kg of a colorless transparent viscous liquid, from which the light fraction had been removed, 0.52 kg of a colorless transparent viscous liquid (polymer) from which the fraction having at most 20 carbon atoms had been completely removed, and 0.5 kg of a hydrogenated polymer were produced. These were analyzed according to the above-mentioned analysis methods, and their data are shown in Table 5.

### Comparative Example 2-3:

A commercially-available poly-α-olefin, INEOS' Durasyn® 174 was analyzed according to the above-mentioned analysis methods. The results are shown in Table 5.

[Table 8]

**Table 5-1**

| | Monomer | | | Polymer before Hydrogenation | | | | | | | | |
|---|---|---|---|---|---|---|---|---|---|---|---|---|
| | C8 | C10 | C12 | Kinematic Viscosity (mm²/sec) | | Ignition Point (°C) | Pour Point (°C) | (mm) (mol%) | Mw | Mn | Mw/Mn | Mean Polymerization Degree P |
| | | | | 40°C | 100°C | | | | | | | |
| Example 2-5 | 400 mL | - | 600 mL | 330 | 38 | 310 | -47 | 32.8 | 3308 | 2535 | 1.30 | 11 |
| Example 2-6 | 400 mL | - | 600 mL | 1407 | 145 | 292 | -40 | 34.0 | 7276 | 4932 | 1.48 | 22 |

| | | | | Hydrogenated Polymer | | | | | | | | |
|---|---|---|---|---|---|---|---|---|---|---|---|---|
| Comparative Example 2-3 | C10 polymer | | | 400 | 40 | 278 | -40 | unfound | 3618 | 2079 | 1.74 | 9 |

[Table 9]

**Table 5-2**

| | Polymer before Hydrogenation | | | | |
|---|---|---|---|---|---|
| | 2,1-Terminal Ratio (mol%) | Mean Short-Chain Branch Number per Molecule of Polymer (number) | Ratio of Branches (mol%) | | |
| | | | methyl group | ethyl group | propyl group |
| Example 2-5 | 78 | 0.8 | 80.6 | 19.4 | 0.0 |
| Example 2-6 | 78 | 0.8 | 47.2 | 52.8 | 0.0 |

| | Hydrogenated Polymer | | | | |
|---|---|---|---|---|---|
| Comparative Example 2-3 | unfound | 2.6 | 73.0 | 14.0 | 13.0 |

[Table 10]

**Table 5-3**

| | Polymer after Hydrogenation | | | | | | |
|---|---|---|---|---|---|---|---|
| | Kinematic Viscosity (mm²/sec) | | Viscosity Index | Double Bond Amount (mol%) | Ignition Point (°C) | Pour Point (°C) | Oxidation Stability (min) |
| | 40°C | 100°C | | | | | |
| Example 2-5 | 399 | 47 | 177 | 0 | 276 | -45 | 2584 |
| Example 2-6 | 1272 | 130 | 210 | 0 | 280 | -40 | 2691 |
| Comparative Example 2-3 | 400 | 40 | 150 | 0 | 278 | -40 | 1205 |

### Example 2-7:

### [Synthesis of (1,1'-dimethylsilylene)(2,2'-dimethylsilylene)-bis(t-butylcyclopentadienyl)zirconium dichloride]

This was Synthesized according to the method described in "Organometallics, Vol. 10, p. 1787 (1991)", and all the solvents used for the Synthesis were dewatered ones.

About 13.8 g (600 mmol) of metal Na and 400 ml of dry THF (tetrahydrofuran) were put into a nitrogen-purged, 1000-ml three-neck flask, and stirred therein at 0°C. After 5 minutes, 1 to 2 ml of cyclopentadiene was dropwise added thereto, and when the hydrogen generation stopped, 1 to 2 ml of additional cyclopentadiene was added thereto. This was repeated, and 50 ml (600 mmol) in total of cyclopentadiene was added. The reaction solution changed from colorless transparent to pale pink. THF was removed through evaporation under reduced pressure, and the crystal was washed twice with hexane and dried to solidness under reduced pressure to give cyclopentadienyl sodium as a pink powder.

457 ml of THF was added to 43.0 g (480 mmol) of cyclopentadienyl sodium at 0°C and stirred. This was cooled to -78°C, and 29.2 ml (480 mmol) of dichlorodimethylsilane was gradually and dropwise added thereto. The solution changed from pink to white. This was stirred overnight at room temperature, then THF was evaporated away to give a yellow powdery compound (1).

The compound (1) was extracted with 150 ml of hexane, and the supernatant was transferred into a nitrogen-purged, 1000-ml three-neck flask. This was cooled to -78°C, and 175.8 ml (480 mmol) of n-butyllithium (2.73 mol/1) was dropwise added thereto. The reaction solution changed from yellow to milky white. This was stirred overnight at room temperature, and filtered, and the supernatant was evaporated away. The resulting white solid was washed with 100 ml of hexane. This was dried under reduced pressure to give a dilithium salt of compound (2) as a white powder.

50 ml of diethyl ether and 100 ml of hexane were added to 27.4 g (137 mmol) of the compound (2). This was cooled to -78°C, and 16.7 ml (137 mmol) of dichlorodimethylsilane was gradually and dropwise added thereto. This was stirred at room temperature for 5 hours, then the precipitate was removed through filtration, and the filtrate was concentrated. This was recrystallized from hexane to give 4.05 g (yield 12%) of a compound (3) as a needle-like transparent crystal.

1.5 g (6.1 mmol) of the compound (3) was dissolved in 60 ml of ether in a nitrogen-purged, 200-ml Schlenk flask, and stirred therein. This was cooled to -78°C, and 5.1 ml (13.5 mmol) of n-butyllithium (2.64 mol/1) was dropwise added thereto, and stirred for 1 hour at room temperature. The cloudy solution was filtered to collect the precipitate as separated from the solvent. The precipitate was washed with 20 ml of hexane. This was dried under reduced pressure to give a dilithium salt of compound (4) as a white powder.

30 ml of THF was added to the compound (4). A THF (10 ml) solution of t-butyl bromide (1.85 g, 13.5 mmol) was dropwise added to the previous solution at -78°C. This was stirred at room temperature, then 40 ml of a solvent CH₂Cl₂ was added thereto, and heating it under reflux was continued for 6 hours. After the reaction, this was filtered and the residue was recrystallized to give 0.9 g (yield 41%) of the compound (4) as a white yellow substance.

0.77 g (2.2 mmol) of the compound (4) was dissolved in 30 ml of ether in a nitrogen-purged, 200-ml Schlenk flask, and stirred therein. This was cooled to -78°C, and 1.77 ml (4.8 mmol) of n-butyllithium (2.69 mol/l) was dropwise added thereto, and stirred for 3 hours at room temperature. The cloudy solution was filtered to collect the precipitate as separated from the solvent. The precipitate was washed with 20 ml of hexane. This was dried under reduced pressure to give a dilithium salt of compound (5) as a white powder.

10 ml of toluene was added to the compound (5). A suspension of zirconium tetrachloride (0.5 g, 2.2 mmol) in toluene (10 ml) was dropwise added to the previous suspension at -78°C. This was stirred overnight at room temperature, and the solvent was evaporated away under reduced pressure. The obtained compound (6) was extracted with 30 ml of dichloromethane, and the filtrate was concentrated and recrystallized to give 0.43 g (yield 38%) of the compound (6). Its ¹H-NMR gave the following data. ¹H-NMR (500 MHz, CDCl₃) δ: 0.52 [6H, s, (CH₃)₂Si], 0.87 [6H, s, (CH₃)₂Si], 1.37 (18H, s, -C(CH₃), 6.77 (4H, s, -CpH-)

### [Production of Hydrogenated Polymer]

A stainless reactor having an inner capacity of 1 liter was fully dried and purged with nitrogen, then 160 ml of 1-octene and 240 ml of 1-dodecene were added thereto, and 0.2 mmol of triisobutylaluminium was put thereinto, and heated up to 70°C. One ml (4 µmol) of a separately prepared catalyst mixture (this was prepared by putting 180 ml of dewatered toluene, 40 mmol of triisobutylaluminium, 0.8 mmol of (1,1'-dimethylsilylene)(2,2'-dimethylsilylene)-bis(t-butylcyclopentadienyl)zirconium dichloride and 1.6 mmol of powdery N,N-dimethylanilinium tetrakis(pentafluorophenyl)borate into a 500-ml glass-made Schlenk flask in a nitrogen atmosphere, then stirring them therein at room temperature for about 1 minute, and thereafter further adding thereto 20 ml of 1-octene and stirring them at room temperature for 1 hour) was put into the reactor, then 0.02 MPaG of hydrogen was introduced thereinto, and the polymerization was started at 70°C. Subsequently, this was kept reacted at 87°C for 300 minutes with 1 ml of the catalyst mixture intermittently added thereto at intervals of 60 minutes, and thereafter 10 ml of methanol was added to stop the polymerization.

100 ml of aqueous 1 mas.% NaOH solution was added, and stirred for 1 hour. After statically kept as such for 1 hour, the aqueous phase was taken out, then 100 ml of pure water was newly added, stirred for 1 hour, statically kept as such for 1 hour, and the aqueous phase was taken out. This operation was repeated twice. The organic layer was filtered through a 2-micrometer filter, then the light components of toluene, the starting material, methanol and others were evaporated away under a reduced pressure of about 3.0 × 10⁻¹ MPa at 140°C, thereby giving 218 g of a colorless transparent viscous liquid. Using a thin film distillation apparatus (UIC's Short-Step Distillation Apparatus, KDL-5), the obtained viscous liquid was distilled under a reduced pressure of 5 × 10⁻⁶ MPa at 180°C, thereby giving 195 g of a colorless transparent viscous liquid from which the fraction having at most 36 carbon atoms had been completely removed.

195 g of the obtained viscous liquid was put into a stainless autoclave having an inner capacity of 1 liter, and 1% by mass of a stabilized nickel catalyst (Sakai Chemical Industry's SN750) was added thereto, and then the polymer was reacted for 6 hours in hydrogen at 2 MPa at 130°C. After the reaction, this was cooled to around 80°C, then the contents were taken out, and filtered through a 1-µm filter at 70°C to remove the catalyst ingredients, thereby giving 190 g of a hydrogenated polymer. This was analyzed according to the above-mentioned analysis methods, and the results are shown in Table 6.

The oxidation stability test is as follows: 5 g of a composition comprising 99% by mass of the hydrogenated polymer obtained in the manner as above, and, as antioxidant, 0.5% by mass of Irganox L-107 and 0.5% by mass of Irganox L-57 was mixed with 30 mg of a catalyst, copper powder. One ml of water was put into the chamber space, and the composition was tested according to a rotating bomb oxidation test of JIS K2514 (RBOT test) as described above.

### Reference Example:

In the same manner as in Example 1-12, a 1-octene/1-dodecene copolymer was produced and hydrogenated to give a hydrogenated polymer. This was analyzed according to the above-mentioned analysis methods, and the results are shown in Table 6.

[Table 11]

**Table 6-1**

| | Monomer | | | Polymer before Hydrogenation | | | | | | | | |
|---|---|---|---|---|---|---|---|---|---|---|---|---|
| | C8 | C10 | C12 | Kinematic Viscosity (mm²/s) | | Ignition Point (°C) | Pour Point (°C) | (mm) (mol%) | Mw | Mn | Mw/Mn | Mean Polymerization Degree P |
| | | | | 40°C | 100°C | | | | | | | |
| Example 2-7 | 160 mL | - | 240 mL | 291 | 38.1 | 288 | -48 | 33.0 | 3858 | 2412 | 1.60 | 16 |
| Reference Example | 300 mL | - | 100 mL | 320 | 39.1 | 276 | -45 | 38.0 | 3398 | 2111 | 1.61 | 13 |

[Table 12]

**Table 6-2**

| | Polymer before Hydrogenation | | | | |
|---|---|---|---|---|---|
| | 2,1-Insertion Ratio at Terminal (mol%) | Mean Short-Chain Branch Number per Molecule of Polymer (number) | Ratio of Branches (mol%) | | |
| | | | methyl group | ethyl group | propyl group |
| Example 2-7 | 75 | 1.3 | 83.6 | 16.4 | 0.0 |
| Reference Example | 9 | 1.3 | 92.0 | 2.8 | 5.2 |

[Table 13]

**Table 6-3**

| | Polymer after Hydrogenation | | | | | | |
|---|---|---|---|---|---|---|---|
| | Kinematic Viscosity (mm²/s) | | Viscosity Index | Double Bond Amount (mol%) | Ignition Point (°C) | Pour Point (°C) | Oxidation Stability (min) |
| | 40°C | 100°C | | | | | |
| Example 2-7 | 307.0 | 39.8 | 183 | 0.1> | 276 | -48 | 2395 |
| Reference Example | 301.97 | 37.0 | 172 | 0.1> | 280 | -45 | 1727 |

As described above, it is known that the α-olefin (co)polymer, especially 1-octene/1-dodecene copolymer of the present invention has excellent oxidation stability.

### [Industrial Applicability]

According to the present invention, an α-olefin (co)polymer useful as high-viscosity lubricant oil excellent in viscosity characteristics and low-temperature characteristics can be produced industrially easily, and the present invention therefore contributes toward fuel consumption reduction, energy saving and operation life prolongation required for lubricant oil.

## Claims

1. An α-olefin (co)polymer produced by the use of a metallocene catalyst and satisfying the following (a') and (b'):
(a') The 2,1-insertion ratio at the polymer terminal, as measured through ¹H-NMR, is at least 30 mol% of the entire molecule,
(b') The mesotriad fraction (mm), as measured through ¹³C-NMR, is at most 50 mol%.

2. The α-olefin (co)polymer according to claim 1, having a mean short-chain branch number per one molecule of the polymer, as measured through ¹³C-NMR, of at most 2.0.

3. The α-olefin (co)polymer according to claim 1 or 2, which is a 1-octene/1-dodecene copolymer.

4. The α-olefin (co)polymer according to any of claims 1 to 3, having a double bond amount relative to all the monomer units, as measured through ¹H-NMR, of at most 1.0 mol%.

5. The α-olefin (co)polymer according to any of claims 1 to 4, having a molecular weight distribution (Mw/Mn), as measured through GPC, of at most 3.0.

6. The α-olefin (co)polymer according to any of claims 1 to 5, having a weight-average molecular weight (Mw), as measured through GPC, of from 200 to 30,000.

7. A hydrogenated α-olefin (co)polymer produced through hydrogenation of the α-olefin (co)polymer according to any of claims 1 to 6.

8. A lubricant oil composition containing the α-olefin (co)polymer according to any of claims 1 to 6 and/or the hydrogenated α-olefin (co)polymer according to claim 7.

9. A 1-octene/1-dodecene copolymer produced by the use of a metallocene catalyst and satisfying the following (a) to (c):
(a) The molar ratio of the 1-octene unit to the 1-dodecene unit is from 20/80 to 80/20,
(b) The mesotriad fraction (mm), as measured through ¹³C-NMR, is at most 50 mol%,
(c) The kinematic viscosity at 100°C is from 30 to 1000 mm²/sec.

10. The 1-octene/1-dodecene copolymer according to claim 9, having a number-average molecular weight (Mn), as measured through GPC, of from 1500 to 15000.

11. The 1-octene/1-dodecene copolymer according to claim 9 or 10, having a weight-average molecular weight (Mw) of from 2100 to 30000;

12. The 1-octene/1-dodecene copolymer according to any of claims 9 to 11, having a molecular weight distribution (Mw/Mn) of at most 3.0.

13. The 1-octene/1-dodecene copolymer according to any of claims 9 to 12, having a double bond amount relative to all the monomer units, as measured through ¹H-NMR, of at most 0.3 mol%.

14. A lubricant oil composition containing the 1-octene/1-dodecene copolymer according to any of claims 9 to 13 and/or a hydrogenated 1-octene/d-dodecene copolymer produced through hydrogenation of the 1-octene/1-dodecene copolymer.
